(19) Europäisches Patentamt
European Patent Office
Office européen des brevets

(11) **EP 3 543 730 B1**

(12) **EUROPÄISCHE PATENTSCHRIFT**

(45) Veröffentlichungstag und Bekanntmachung des Hinweises auf die Patenterteilung:
**14.07.2021   Patentblatt 2021/28**

(21) Anmeldenummer: **19168179.0**

(22) Anmeldetag: **14.05.2014**

(51) Int Cl.:
*G01S 5/02* (2010.01)     *G08B 13/14* (2006.01)
*G01S 13/87* (2006.01)     *G01S 5/10* (2006.01)
*G08B 21/02* (2006.01)     *G08B 21/24* (2006.01)

(54) **VERFAHREN ZUM ORTEN EINES FUNK-TAGS**

METHOD FOR LOCATING A WIRELESS TAGS

PROCÉDÉ DE LOCALISATION D'UNE ÉTIQUETTE RFID

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.09.2019   Patentblatt 2019/39**

(62) Dokumentnummer(n) der früheren Anmeldung(en) nach Art. 76 EPÜ:
**14729226.2 / 3 143 422**

(73) Patentinhaber: **SES-imagotag GmbH**
**8072 Fernitz-Mellach (AT)**

(72) Erfinder: **Rößl, Andreas**
**8072 Fernitz-Mellach (AT)**

(74) Vertreter: **Schneider, Michael**
**Schulweg 8/3/8**
**2340 Mödling (AT)**

(56) Entgegenhaltungen:
**WO-A1-2013/007089     DE-A1-102013 014 849**

**Beschreibung**

Technisches Feld

Die Erfindung betrifft ein Verfahren zum Orten eines Funk-Tags.
Die Erfindung betrifft weiterhin einen Funk-Tag mit einer Kommunikationsstufe und einer damit zusammenwirkenden Logikstufe.
Die Erfindung betrifft weiterhin ein System zum Orten eines Funk-Tags.

Hintergrund

Herkömmliche Systeme und Verfahren zum Orten eines zum Empfangen und/oder Senden von Funksignalen ausgebildeten Geräts basieren meist auf Triangulations- oder Laufzeitmessungs-Methoden. Solche Methoden haben sich jedoch aus den verschiedensten Gründen bei ihrer Anwendung im Inneren eines Gebäudes oder Raumes als nachteilig, nur eingeschränkt einsetzbar bzw. überhaupt nicht anwendbar erwiesen. Da jeder Innenraum, insbesondere auch jedes Geschäftslokal, individuell ist und in sich selbst eine hochgradige Inhomogenität in Bezug auf Funksignalausbreitung aufweist, hat sich eine Positionsbestimmung mit Hilfe von z.B. Triangulation unter Verwendung von mehreren fix installierten Access-Points als nicht zielführend erweisen.
Weiterhin ist aus der WO2013/007089A1 bzw. der EP2733503A1 bekannt, ein sich bewegendes Zieletikett in einer komplexen Umgebung unter Verwendung eines Verfahrens zu lokalisieren, wobei Ortsinformationen für ein mobiles Etikett unter Verwendung kostengünstiger fester aktiver RFID-Etiketten anstelle einer Vielzahl von Lesegeräten, die eine Netzwerkverbindung erfordern, bereitgestellt werden. Die Standortinformationen des mobilen Etiketts werden mithilfe eines mobilen oder festen Standortetiketts aus großer Entfernung direkt an ein Lesegerät in der Mitte eines Ortungsbereichs übertragen.
Weiterhin ist aus der DE102013014849A1 ein System und Verfahren der Verlust-Vorbeugung, des Auffindens und Verfolgers von persönlichen Besitztümern durch die Benutzung von kabelloser Hardware und mobilen elektronischen Einrichtungen, wie Smartphones, Tablet Computern und tragbaren Computern bekannt. Das Verfahren kann das Empfangen einer kabellosen Kommunikation von einer kabellosen Vorrichtung, die an einen Gegenstand angebracht ist, enthalten, das Bestimmen einer Signalstärkenablesung von der Kommunikation und das Bestimmen, ob die Signalstärkenablesung unter einem adaptierbaren Alarmgrenzwert liegt, enthalten, und, wenn die Signalstärkenablesung unter dem Alarmgrenzwert liegt, den Benutzer alarmieren enthalten.
Die Erfindung hat sich die Aufgabe gestellt, ein Verfahren, einen Funk-Tag, sowie ein System bereitzustellen, sodass die eingangs erörterten Probleme vermieden sind.

Zusammenfassung der Erfindung

Diese Aufgabe wird durch ein erfindungsgemäßes Verfahren nach Anspruch 1 gelöst.
Der Gegenstand der Erfindung ist daher ein Verfahren zum Orten eines positionsunbekannten Funk-Tags, wobei in einer Gruppe von Funk-Tags, insbesondere ausgebildet als elektronische Preisanzeigeeinrichtungen, ein Ortungssignal entweder a) durch einen oder mehrere positionsbekannte Funk-Tags ausgesendet wird und von dem positionsunbekannten Funk-Tag empfangen wird, oder b) durch den positionsunbekannten Funk-Tag ausgesendet wird und von einem oder mehreren positionsbekannten Funk-Tags empfangen wird, und in beiden Fällen a), b) bei dem das Ortungssignal empfangenden Funk-Tag die Empfangsqualität des Ortungssignals zum Eingrenzen der Position des positionsunbekannten Funk-Tags ermittelt und bereitgestellt wird, dadurch gekennzeichnet, dass bei erfolgter Ortung eines positionsunbekannten Funk-Tags eine Anzahl positionsbekannter Funk-Tags, die ortsbenachbart zu dem georteten Funk-Tag positioniert sind, veranlasst wird, die Ortung des positionsunbekannten Funk-Tags in ihrer Umgebung mit Hilfe Ihrer Anzeigeeinrichtung anzuzeigen, z.B. durch Anzeige eines Symbols, beispielsweise eines Kreises, oder eines Blinkverhaltens.
Weiterhin offenbart dieses Dokument einen Funk-Tag mit einer Funk-Kommunikationsstufe zum Empfang eines von einem anderen Funk-Tag ausgesandten Ortungssignals und einer mit der Funk-Kommunikationsstufe zusammenwirkenden Logikstufe, wobei die Logikstufe dazu ausgebildet ist, den Empfang des Ortungssignals dann zu ermöglichen, sobald der andere Funk-Tag das Ortungssignal aussendet, und wobei der Funk-Tag (Tn) zum Auswerten eines empfangenen Ortungssignals hinsichtlich der Empfangsqualität des Ortungssignals und zum Bereitstellen der ermittelten Empfangsqualität zum Eingrenzen der Position eines positionsunbekannten Funk-Tags ausgebildet ist.
Weiterhin offenbart dieses Dokument ein System zum Orten eines positionsunbekannten Funk-Tags aufweisend eine Gruppe von Funk-Tags, wobei entweder a) ein oder mehrere positionsbekannte Funk-Tags zum Aussenden eines Ortungssignals ausgebildet sind und der positionsunbekannte Funk-Tag derart ausgebildet ist, dass das Ortungssignal dann empfangbar ist, sobald der oder die positionsbekannten Funk-Tags es aussenden, oder b) der positionsunbekannte Funk-Tag zum Aussenden eines Ortungssignals ausgebildet ist und ein oder mehrere positionsbekannte Funk-Tags derart ausgebildet sind, dass das Ortungssignal dann empfangbar ist, sobald der positionsunbekannten Funk-Tags es aussendet, und in beiden Fällen a), b) der das Ortungssignal empfangende Funk-Tag zum Auswerten des Ortungssignals hinsichtlich der Empfangsqualität des Ortungssignals und zum Bereitstellen der ermittelten Empfangsqualität ausgebildet ist

Mit Hilfe der bereitgestellten Empfangsqualität lässt sich die Position des positionsunbekannten Funk-Tags eingrenzen oder auch bestimmen. Dabei ist lediglich ein einziger Access-Point nötig, dem die an der Suche beteiligten Tags funktechnisch zugeordnet sind. Besteht ein System aus mehreren Access-Points und ihnen individuell zugeordneten Tags, so können jene Access-Points und die ihnen zugeordneten Tags ungestört einen normalen Kommunikationsbetrieb abwickeln, während nur ein einziger Access-Point mit den ihm zugeordneten Tags mit der Suche des ebenfalls ihm zugeordneten und zu ortenden Tag beschäftigt ist. Es erfolgt also ein möglichst geringer Eingriff in die Gesamtsystemperformance.

Ein Funk-Tag (allgemein auch als "Funk-Etikett" bezeichnet), nachfolgend kurz Tag genannt, weist im Wesentlichen eine Funk-Kommunikationsstufe, auch Transceiver genannt, und eine damit zusammenwirkende Logikstufe auf, die logische Funktion eines Tag bereitstellt. Die Logikstufe kann z.B. vollständig durch Hardware realisiert sein oder einen Mikroprozessor und Speicherbausteine oder einen Mikrokontroller mit integrierten Speicherbausteinen aufweisen, sodass in den Speicherbausteinen gespeicherte Software abarbeitbar ist. Ein Tag kann mit Hilfe seiner Funk-Kommunikationsstufe ein Funk-Signal empfangen, in dem Funk-Signal enthaltene Empfangsdaten mit Hilfe der Logikstufe verarbeiten und gegebenenfalls mit Hilfe der Logikstufe Antwortdaten generieren und diese über die Funk-Kommunikationsstufe wieder als ein Funk-Signal abgeben. Die Funk-Kommunikationsstufe weist Mittel zur Funkkommunikation und zur Konvertierung von analogen Signalen in digitale Signale und umgekehrt auf.

Die Implementierung des Funkprotokolls kann beispielsweise gemäß dem "ZigBee" Standard, dem "BlueTooth" Standard oder auch gemäß einem proprietären Protokoll erfolgen. Die Logikstufe implementiert das Funkprotokoll sodass eine Kommunikation zwischen Tag und Access-Point gemäß Systematik und Timing des Funkprotokolls durchführbar ist.

Ein solcher Tag kann beispielsweise in ein elektronisches Preisanzeigeschild (im Fachjargon "Electronic Shelf Label", kurz ESL bezeichnet), integriert sein. Der Tag kann jedoch auch Bestandteil einer anderen Vorrichtung sein oder als eigenständige Vorrichtung zum Beispiel gekapselt in einem eigenen Gehäuse vorliegen.

Gemäß einem bevorzugten Ausführungsbeispiel kommt ein proprietäres Funk-Protokoll, das ein Zeitschlitzkommunikationsverfahren implementiert, zur Anwendung, mit dessen Hilfe mehrere Tags mit einem Access-Point kommunizieren können. Ein Access-Point (allgemein auch als "Kommunikationsgerät" bezeichnet) ist eine Basisstation, die als Schnittstelle zwischen einer kabelgebundenen Kommunikation mit z.B. einer Datenverarbeitungseinrichtung (z.B. einem Server) und einer kabellosen Kommunikation mit anderen Geräten, im vorliegenden Fall den Tags, dient. Gemäß diesem Protokoll können die Tags zunächst bei dem Access-Point registriert bzw. ihm zugeordnet werden, um für eine Kommunikation mit diesem Access-Point benutzbar zu sein. Bei der Registrierung wird jedem Tag ein vordefinierter, individueller Zeitschlitz für die Kommunikation mit dem Access-Point zugewiesen. Dabei kommen z.B. innerhalb von n Sekunden, z.B. 15 Sekunden, m Zeitschlitze, z.B. 255 Zeitschlitze, zum Einsatz. Die n Sekunden bilden einen Zeitschlitzzyklus, der sich fortwährend wiederholt und auch Synchronisationszyklus genannt wird. In diesem Zeitschlitzkommunikationsverfahren stehen also m Zeitschlitze innerhalb eines Synchronisationszyklus für eine Kommunikation mit Tags zur Verfügung. Jeder der Tags ist einem der Zeitschlitze zugeordnet, wobei einem bestimmten Zeitschlitz auch mehrere Tags zugeordnet sein können, z.B. 2, 3 oder 4 Tags. Innerhalb von einer Minute existieren 4 Synchronisationszyklen mit je 255 Zeitschlitzen, sodass sich mit z.B. 2 Tags pro Zeitschlitz eine Gesamtanzahl von 2040 Tags adressieren lässt.

Ein solcher Funk-Tag kann zu seiner Energieversorgung einen Energiespeicher, wie z.B. eine Batterie oder ein Solarpaneel gekoppelt mit einer aufladbaren Batterie aufweisen. Um möglichst energieeffizient zu arbeiten, weisen die Funk-Tags verschiedene Betriebs-Zustände auf.

Die Tags werden in einem Normalmodus betrieben. In diesem Normalmodus befinden sie sich entweder in einen Aktiv-Zustand mit relativ hohem Energieverbrauch oder in einem Schlaf-Zustand mit relativ niedrigem Energieverbrauch. Der Aktiv-Zustand liegt in einem für sie bestimmten Zeitschlitz zur Kommunikation mit dem Access-Point vor. In dem Aktiv-Zustand weisen sie eine Empfangsbereitschaft auf, um Befehle und gegebenenfalls auch Empfangs-Daten von dem Access-Point zu empfangen und mit Hilfe der Logikstufe zu verarbeiten. Im Aktiv-Zustand können auch mit Hilfe der Logikstufe Sende-Daten generiert und an den Access-Point kommuniziert werden. Außerhalb des für sie bestimmten Zeitschlitzes werden die Tags in einem energiesparenden Schlaf-Zustand betrieben. In dem Schlaf-Zustand führt die Logikstufe nur jene Aktivitäten durch, die für das Timing zum rechtzeitigen Aufwachen knapp vor dem jeweiligen dem Tag zugeordneten Zeitschlitz nötig sind, damit sie in dem nächsten für sie bestimmten Zeitschlitz zur Kommunikation mit dem Access-Point bereit sind. Bei der Kommunikation können Datenpaket aufweisend Daten zur Sender-Kennung, zur Empfänger-Kennung, zur Steuerung und / oder zum Informationsinhalt sowie Daten zu Empfangsqualität usw. zur Anwendung kommen.

Die Funk-Tags können sich mit Hilfe einer Synchronisations-Signalstruktur (z.B. ein relativ kurzes Signal am Anfang des jeweiligen Zeitschlitzes) ausgesandt durch den Access-Point in jedem der Zeitschlitze mit dem Zeitraster des Zeitschlitzkommunikationsverfahrens erstmalig synchronisieren, um den Kommunikationsbetrieb mit dem Access-Point zu starten, im Verlauf des Betriebs re-synchronisieren, wenn sie den synchronen Zustand durch irgendwelche Umstände verloren haben, und synchron halten, wenn kleinere Abweichungen vom synchronen Zustand vorliegen, die durch Ungenauigkeiten wie z.B. eine Drift ihrer inneren Uhr bedingt sind.

Das Ortungssignal kann beispielsweise eine fix vordefinierte Daten-Signalstruktur aufweisen und / oder einen vordefinierten Dateninhalt aufweisen. Das Ortungssignal kann jedoch auch von Fall zu Fall unterschiedliche Strukturen bzw. einen variablen Dateninhalt aufweisen. Auch können beliebige Dateninhalte, wie z.B. zufällige Dateninhalte zur Anwendung kommen, wenn vorab im System geklärt wurde, dass nun mit einem Ortungssignal zu rechen ist. Das Ortungssignal kann auch die Kennung des jeweils sendenden Tags enthalten, oder nur durch diese Kennung definiert sein.

Ein Funk-Tag, insbesondere seine Funk-Kommunikationsstufe, kann so ausgebildet sein, dass der Tag die relative Empfangsfeldstärke eines empfangenen Funk-Signals selbst bestimmen bzw. messen oder auch berechnen kann. Dabei wird im Tag ein sogenannter "Received Signal Strength Indicator" (RSSI) bereitgestellt, der einen Indikator für die Empfangsfeldstärke darstellt. Da der RSSI keine festgelegte Einheit hat, muss der Wert des RSSI abhängig vom Datenblatt des Herstellers interpretiert werden, wobei für gewöhnlich ein höherer Wert des RSSI eine höhere Empfangsfeldstärke anzeigt. Bereits der Wert des RSSI allein genommen kann als Maß für die Empfangsqualität dienen. Zudem kann der Tag, insbesondere sein Funk-Kommunikationsmodul oder die Logikstufe, zum Bestimmen der Qualität der Datenübertragung für ein empfangenes Signal ausgebildet sein. Dabei wird im Tag eine sogenannte "Link Quality" (LQ) bestimmt. Es kann von Vorteil sein, wenn die Link Quality bei der Bestimmung der Empfangsqualität mitberücksichtigt wird, weil sie neben dem RSSI auch die Qualität der Daten, also die Brauchbarkeit des Informationsgehalts des empfangenen Funk-Signals mitberücksichtigt. In einer bevorzugten Ausbildungsform werden zur Bestimmung der Empfangsqualität beide Werte so gewichtet, dass die Summe der Gewichte 100% ergibt, also z.B. der Beitrag des RSSI 80% und der Beitrag des LQ 20% zur Empfangsqualität ist. Es können jedoch auch andere Gewichtungen wie z.B. RSSI 35 % und LQ 65% oder RSSI 50% und LQ 50% zur Anwendung kommen. Es kann jedoch auch ein Wert für die "Link Quality" alleine genommen als ein Maß dienen, um die Empfangsqualität anzuzeigen.

Mit der Erfindung geht der Vorteil einher, dass ein vermisster oder zu lokalisierender Funk-Tag mit Hilfe eines oder mehrerer anderer Tags auffindbar ist. Kommt nur ein einziger anderer Tag zum Einsatz, so lässt sich seine Position zumindest eingrenzen. Bevorzugt kommen jedoch mehrere andere, positionsbekannte Tags zum Einsatz. Je mehr andere Tags zum Einsatz kommen, desto genauer lässt sich die Position des zu lokalisierenden Tags ermitteln. Der positionsunbekannte Tag lässt sich also besonders gut mit Hilfe eines Schwarms anderer Tags auffinden. In Abkehr von herkömmlichen Verfahren, bei denen z.B. eine spezielle Ausbildung des Access-Points oder eine spezielle Anzahl von Access-Points (z.B. drei Stück für Triangulation) oder eine spezielle Positionierung der Access-Points nötig ist, um die Position eines Tag festzustellen bzw. einzugrenzen, kommen im vorliegenden Fall nur positionsbekannte Tags selbst als Positionsreferenzen zum Einsatz. Die Vielzahl an im Raum verteilten kleinen Knoten (Schwarm von Tags) löst also ein Problem auf rasche und effiziente Weise, das mit Hilfe einer Anzahl (2, 3 oder 4 Stück) irgendwo im Raum (z.B. zentral positionierten) Access-Points nicht oder nur unzureichend gelöst werden kann. Gemäß der Erfindung kommt der jeweiligen bei einem empfangenden Tag ermittelten Empfangsqualität die Bedeutung eines Abstandes zu dem jeweils sendenden Tag zu, woraus sich unter Kenntnis der Position von positionsbekannten Tags die Position des / der gesuchten oder zu verfolgenden (positionsunbekannten) Tags bestimmen bzw. eingrenzen lässt.

Die Erfindung lässt sich insbesondere in einem Geschäftslokal - also im Inneren eines Gebäudes - gut anwenden, in dem der gesamte Geschäftsbereich mit einigen wenigen, z.B. nur zwei Stück, Access-Points funktechnisch abgedeckt ist und sich die Funkbereiche der Access-Points großflächig überlappen. Dort können bis zu 20.000 Tags oder mehr an unterschiedlichsten Positionen (z.B. an Regalen oder an Produkten befestigt) lokalisiert sein. Wenn aus dieser großen Menge z.B. fünf Stück nicht an ihrem vordefinierten Platz sind, sind diese vermissten Tags manuell kaum auffindbar. Hier greift die Erfindung lösend ein und bietet eine kompakte und effiziente Lösung zum Auffinden bzw. Suchen oder auch Verfolgen von einzelnen Tags.

In allen nachfolgend erörterten Varianten der Erfindung wird also von einem Tag eine Kommunikation eines anderen Tags, die entweder für den empfangenden Tag selbst oder für einen anderen Empfänger (z.B. den Access-Point) bestimmt ist, empfangen und bei dem empfangenden Tag hinsichtlich ihrer Empfangsqualität ausgewertet, was die Grundlage zur Ortsbestimmung bildet. Die Genauigkeit steigt mit der Anzahl der Tags, die an der Suche beteiligt sind.

Weitere, besonders vorteilhafte Ausgestaltungen und Weiterbildungen der Erfindung ergeben sich aus den abhängigen Ansprüchen sowie der nachfolgenden Beschreibung. Dabei kann der Funk-Tag oder auch das System entsprechend den abhängigen Ansprüchen zum Verfahren weitergebildet sein. Vorteile, die im Zusammenhang mit Merkmalen der einen Kategorie oder deren Ansprüchen erörtert werden, treffen analog auch für jede andere Kategorie oder deren Ansprüche zu.

Eine Kommunikation - z.B. zwischen den Funk-Tags oder einem Funk-Tag und dem Accesspoint - kann für die Zwecke der Positionsbestimmung des positionsunbekannten Tags oder im normalen Kommunikationsbetrieb bidirektional oder uni-direktional oder auch verschlüsselt ablaufen.

Gemäß einer ersten Ausbildungsform der Erfindung sendet jener das Ortungssignal empfangende positionsbekannte Funk-Tag die ausgewertete Empfangsqualität an eine Datenverarbeitungseinrichtung, und bei der Datenverarbeitungseinrichtung wird unter Kenntnis der Position des oder der positionsbekannten Funk-Tags und unter Berücksichtigung der von dem jeweiligen positionsbekannten Funk-Tag empfangenen Empfangsqualität die Position des positionsunbekannten Funk-Tags eingegrenzt. Diese Maßnahme kann für einen ersten Anwendungsfall zum Einsatz kommen.

Gemäß diesem ersten, beispielhaften Anwendungsfall sei angenommen, dass der positionsunbekannte Tag von dem Access-Point instruiert wurde, Ortungssignale auszusenden. Positionsbekannte Tags wurden von dem Access-Point instruiert, darauf zu lauschen. Die Ortungssignale können in einem vom Zeitschlitzkommunikationsverfahren losgelösten Zeitfenster ausgesendet und empfangen werden. Sie können jedoch auch in jenen Zeitschlitzen des Zeitschlitzkommunikationsverfahrens gesendet werden, die den jeweiligen positionsbekannten Tags zugeordnet sind. Die Ortungssignale können adressiert oder nicht adressiert sein. Jeder involvierte positionsbekannte Tag registriert jedes empfangene Ortungssignal und merkt sich (speichert) die ermittelte Empfangsqualität. Im vorliegenden Fall ist es nicht notwendig, ein Datenpaar aus eigener Kennung und Empfangsqualität zu speichern, vielmehr reicht die Speicherung der ermittelten Empfangsqualität aus. Um nämlich die Position zu ermitteln wird mit Hilfe des Access-Points von jedem positionsbekannten Tag die zuvor ermittelte Empfangsqualität abgefragt, wobei bei dem Access-Point eindeutig bekannt ist, von welchem positionsbekannten Tag dies geschieht. Der Access-Point, der die Kennung des an der Kommunikation beteiligten Tags kennt, assembliert also auf seiner Seite das Datenpaar aus der Kennung des soeben abgefragten positionsbekannten Tags und der von diesem Tag erhaltenen Empfangsqualität und liefert dieses Datenpaar an die Datenverarbeitungseinrichtung, wo die finale Auswertung zur Ortsbestimmung des ortsunbekannten Tags erfolgt. Vorteilhaft ist hierbei das relativ geringe Datenaufkommen bei der Übertragung der relevanten Daten (im vorliegenden Fall jene Daten, die nur die Empfangsqualität repräsentieren) von dem positionsbekannten Tag hin zu dem Access-Point.

Gemäß dem ersten Anwendungsfall kann jedoch auch das Generieren eines Datenpaares aus der eigenen Kennung und der ermittelten Empfangsqualität im betroffenen positionsbekannten Tag erfolgen, um dieses Datenpaar an den Access-Point zu kommunizieren.

Im Rahmen des ersten Anwendungsfalles kann auch implementiert sein, dass der positionsbekannte Tag das empfangene Ortungssignal hinsichtlich der Empfangsqualität sowie der Kennung des sendenden ortsunbekannten Tags auswertet und bereitstellt, also an den Access-Point zur weiteren Verarbeitung durch die Datenverarbeitungseinrichtung kommuniziert. Dies ist dann von Vorteil, wenn mehrere ortsunbekannte Tags gleichzeitig gesucht werden.

Gemäß diesem ersten Anwendungsfall sind die zur Bestimmung der Position des positionsunbekannten Tags benötigten Werte der Empfangsqualität, ggf. auch als Datenpaare mit Kennungen, wie oben erörtert, gespeichert auf individuelle positionsbekannte Tags verteilt verfügbar und können dort individuell abgerufen, also zur weiteren Verarbeitung eingesammelt werden. Erfolgt die Suche losgelöst vom Zeitschlitzkommunikationsverfahrens, können die Ergebnisse der Auswertung (Empfangsqualität / Datenpaare) nach Re-Synchronisierung der an der Suche beteiligten Tags in individuellen Zeitschlitzen an den ortsunbekannten Tag übermittelt, dort zentral gesammelt und von dort auch über den Access-Point an eine Datenverarbeitungseinrichtung übermittelt werden. Bevorzugt werden sie jedoch von den jeweiligen positionsbekannten Tags direkt über den Access-Point an besagte Datenverarbeitungseinrichtung übermittelt.

Gemäß einer zweiten Ausbildungsform der Erfindung sendet jener das Ortungssignal aussendende positionsbekannte Funk-Tag das Ortungssignal mit seiner Kennung aus und jener das Ortungssignal empfangende positionsunbekannte Funk-Tag wertet das Ortungssignal hinsichtlich der mit dem Ortungssignal übermittelten Kennung aus und stellt ein Datenpaar aus Kennung und zugehöriger Empfangsqualität bereit. Diese Maßnahme kann für einen zweiten und einen dritten Anwendungsfälle zum Einsatz kommen.

Gemäß dem zweiten, beispielhaften Anwendungsfall sei davon ausgegangen, dass der positionsunbekannte Tag von dem Access-Point instruiert wurde, auf Ortungssignale zu lauschen. Positionsbekannte Tags wurden von dem Access-Point instruiert, Ortungssignale auszusenden, die an den positionsunbekannten Tag adressiert sind. Der positionsunbekannte Tag registriert jedes empfangene Ortungssignal, das an ihn adressiert ist, mit Hilfe des besagten Datenpaares. Die Adressierung kann explizit im Signal durch Angabe der Kennung des ortsunbekannten Tag erfolgen oder sich aus dem Verhalten (Sender- bzw. Empfänger-Zustand während einer bestimmten Zeitspanne) der beteiligten Tags implizit ergeben.

Gemäß dem dritten, beispielhaften Anwendungsfall sei davon ausgegangen, dass der positionsunbekannte Tag von dem Access-Point instruiert wurde, auf Ortungssignale zu lauschen. Positionsbekannte Tags wurden von dem Accesspoint instruiert, Ortungssignale auszusenden, die an den Access-Point adressiert sind. Diese Ortungssignale können, müssen jedoch nicht, reguläre Daten-Signale sein, die von dem positionsbekannten Tag an den Access-Point kommuniziert werden. Während der positionsbekannte Tag Daten an den Access-Point kommuniziert, wird von dem positionsunbekannten Tag dieser Daten-Signalverkehr zu dem Access-Point mitgehört. Dies kann so erfolgen, dass z.B. der ortsunbekannte Tag nicht nur in seinem Zeitschlitz wach ist und auf Signale lauscht, sondern auch in jenen Zeitschlitzen wach ist und auf Signale lauscht, die den anderen ortsbekannten Tags zugeordnet sind. Es kann jedoch auch außerhalb des Timings des Zeitschlitzkommunikationsverfahrens eine Zeitspanne für diesen Fall definiert werden. Die an der Suche beteiligten Tags müssen dann das Zeitschlitzkommunikationsverfahren verlassen, um die Ortungssignale zu empfangen. Der positionsunbekannte Tag registriert jedes empfangene Ortungssignal, das an den Accesspoint adressiert ist, mit Hilfe des besagten Datenpaares.

Sowohl im zweiten als auch im dritten Anwendungsfall lauscht der positionsunbekannte Tag auf Ortungssignale aus dem Schwarm bzw. der Gruppe der anderen Tags, deren Position bekannt ist und sammelt zentral eine Anzahl an Datenpaaren für die spätere Auswertung.

Im Rahmen der zweiten Ausbildungsform des Verfahrens könnte die Auswertung des Datenpaares zur Bestimmung bzw. Eingrenzung der Position des positionsunbekannten Tags zum Beispiel innerhalb des positionsunbekannten Tags erfolgen. Zu diesem Zweck muss der positionsunbekannte Tag Kenntnis über die Positionen der anderen positionsbekannten Tags haben oder zumindest eine Beziehung zwischen Empfangsqualität und Entfernung kennen. Diese Kenntnis kann er durch einen vorangehenden Download entsprechender Daten, z.B. Positionsdaten für positionsbekannte Tags, von einer Datenverarbeitungseinrichtung erhalten haben. Zur Bestimmung seiner Position rechnet der positionsunbekannte Tag die ermittelte Empfangsqualität in eine Entfernung vom jeweiligen durch die Kennung identifizierten Tag um und kann in Abhängigkeit der Anzahl der empfangenen Ortungssignale seine Position grob eingrenzen oder auch relativ genau feststellen. Die von dem jeweiligen durch die Kennung identifizierten Tag ermittelte Entfernung kann noch einer Korrektur unterzogen werden, wobei diese Korrektur die Umgebung des jeweiligen Tags und somit die Signalausbreitungseigenschaften in seiner Umgebung berücksichtigt. Die so ermittelte Position wird danach an die Datenverarbeitungseinrichtung übermittelt. Es kann die Position des positionsunbekannten Tags jedoch auch relativ zu den positionsbekannten Tags ermittelt werden.

Bevorzugt sendet jedoch jener das Ortungssignal empfangende positionsunbekannte Funk-Tag das Datenpaar an eine Datenverarbeitungseinrichtung. Dies ist deshalb zu bevorzugen, weil damit rechenintensive und letztendlich energiekonsumierende Aktivitäten der Logikstufe vermieden sind. Es können alle Datenpaare oder nur eine einem Kriterium entsprechende Auswahl daraus übertragen werden. Als Kriterium kann z.B. die Empfangsreihenfolge oder auch die Reihung gemäß der Empfangsqualität zum Einsatz kommen. Es können dann z.B. nur die fünf oder zehn bestgereihten Datenpaare übertragen werden, was eine erheblich verbesserte Energieeffizient mit sich bringt, als wenn alle zur Verfügung stehenden Datenpaare übertragen würden. Auch wird die Systemeffizienz erheblich verbessert, weil die Übertragung rascher erfolgt und das System früher in den Normalmodus zurückkehr, als dies der Fall bei einer vollständigen Übertragung aller Datenpaare wäre. Nach Empfang des oder der Datenpaare wird bei der Datenverarbeitungseinrichtung unter Kenntnis der Position des oder der positionsbekannten Funk-Tags und unter Berücksichtigung der von dem positionsunbekannten Funk-Tag empfangenen Datenpaare die Position des positionsunbekannten Funk-Tags eingegrenzt. Obwohl die Bestimmung der Position des positionsunbekannten Tags nach wie vor auf Grundlage der Überwachung der Kommunikation eines Tags mit seiner Umgebung erfolgt, werden nun Speicherressourcen und Rechenleistung benötigende Aktivitäten in die Datenverarbeitungseinrichtung ausgelagert. In der Datenverarbeitungseinrichtung stehen nach Empfang eines oder mehrerer Datenpaare alle zusätzlichen Informationen zur Bestimmung der Position des positionsunbekannten Tags zur Verfügung, wie beispielsweise die Positionskoordinaten der positionsbekannten Tags, die Beziehung zwischen Empfangsqualität und Entfernung für den jeweiligen Tag, sowie gegebenenfalls auch die anzuwendende Korrektur zur Berücksichtigung der Umgebung des jeweiligen Tags. Wird besagter Tag zum Beispiel integriert in ein elektronisches Preisanzeigeschild verwendet, sind bei der Datenverarbeitungseinrichtung exakte Koordinaten für positionsbekannte Tags verfügbar, da jedes Preisschild genau einem Produkt zugeordnet ist und die Position des Produkts im Geschäft bis hin zur exakten Lage in einem Regal in einem so genannten Planogramm vermerkt ist. Mit dieser Vorgehensweise ist auch sichergestellt, dass die Energiereserve des positionsunbekannten Tags möglichst geschont wird. Ist kein Planogramm verfügbar, so können auch bekannte Koordinaten der ortsbekannten Tags und / oder relative Abstände zwischen den ortsbekannten Tags zur Ortsbestimmung des unbekannten Tags zur Anwendung kommen.

Gemäß einem weiteren Aspekt der Erfindung wird jener zum Senden des Ortungssignals bestimmte Funk-Tag, insbesondere der ortsbekannte Tag, durch einen empfangenen Suchbefehl von seinem Normalmodus in einen Suchmodus umgeschaltet, wobei in dem Modus das Ortungssignal und / oder der Zeitpunkt für das Aussenden des Ortungssignals und / oder die Häufigkeit des Aussendens des Ortungssignals festgelegt wird. Das Umschalten erfolgt durch ein Dekodieren des Suchbefehls mit Hilfe der Logikstufe.

Es kann für den Zeitpunkt das Aussenden des Ortungssignals ein von dem im Normalmodus benutzen Zeitschlitzkommunikationsverfahren abweichendes Timing zur Anwendung kommen. Dabei kann der Start des Aussendens erfolgen, sobald der letzte Suchbefehl an einen involvierten Tag zugestellt wurde. Dabei kann der Start nach Verstreichen des betreffenden Zeitschlitzzyklus erfolgen oder auch schon dann, wenn der betreffende Zeitschlitzzyklus noch nicht vollständig verstrichen ist. Dieses Verlassen des Timings des Zeitschlitzkommunikationsverfahrens kann von Vorteil sein, weil ein im auf Signale lauschenden Zustand befindlicher Tag über relativ lange Zeitspannen in seinem Aktiv-Zustand verharren muss, wenn verglichen mit seinem Timing im Zeitschlitzkommunikationsverfahren, was sich nachteilig auf seine Energiebilanz auswirkt und zu einer verkürzten Lebenszeit führt. Je schneller die Suche beginnt und je schneller die Suche wieder abgeschlossen ist, also der Normalmodus im Zeitschlitzkommunikationsverfahren eingenommen wird, desto energieeffizienter arbeitet das System der Tags. Es kann jedoch auch der Zeitpunkt für das Aussenden des Ortungssignals durch den bereits im Normalmodus zur Anwendung kommende Zeitschlitz, der für die Kommunikation mit dem betreffenden Tag vorgesehen ist, definiert sein. Im Unterschied zum Normalmodus wird nun in diesem Zeitschlitz nicht auf Signale ausgesandt durch den Access-Point gelauscht, sondern das Ortungssignal ausgesandt. Unabhängig davon, ob das Zeitschlitzkommunikationsverfahren beibehalten oder verlassen wird, kann der Start des Aussendens des Ortungssignals auch zu einem beliebigen, insbesondere vorab zu definierenden späteren Zeitpunkt erfolgen.

Zudem kann definiert sein, dass das Aussenden des Ortungssignals häufiger als ein einziges Mal durchgeführt wird, um beispielsweise mehrere Ortungssignale von ein und demselben Tag zur weiteren Verarbeitung zur Verfügung zu haben. Dies ermöglicht eine statistische Auswertung des betreffenden Ortungssignals, was die Genauigkeit der Ortsbestimmung verbessern kann. Damit kann jedoch auch sichergestellt werden, dass im Fall von Störungen bei der Signalübertragung eine erhöhte Wahrscheinlichkeit vorliegt, um das Ortungssignal zumindest ein einziges Mal zu empfangen. So kann das Aussenden z.B. innerhalb einer definierten Zeitspanne zu vom Tag autonom festgelegten, zufälligen Zeitpunkten erfolgen. Das Aussenden kann jedoch auch zu fix (vorab) eingestellten Zeitpunkten erfolgen.

Gemäß einem weiteren Aspekt der Erfindung wird jener zum Empfangen des Ortungssignals bestimmte Funk-Tag, insbesondere der ortsunbekannte Funk-Tag, durch einen empfangenen Ortungsbefehl von seinem Normalmodus in einen Ortungsmodus umgeschaltet, wobei in dem Ortungsmodus eine Empfangsbereitschaft zum Empfangen von Ortungssignalen während einer Ortungssignal-Empfangsdauer besteht. Das Umschalten erfolgt durch ein Dekodieren des Ortungsbefehls mit Hilfe der Logikstufe. Der Tag kann dabei eine im Vergleich zur regulären Empfangsdauer eines Zeitschlitzes gemäß dem Zeitschlitzkommunikationsverfahren im Normalmodus verlängerte Empfangsdauer im Ortungsmodus einnehmen und sich somit aus dem für den Normalmodus charakteristischen Zeitschlitzkommunikationsverfahren herausnehmen. Im Unterschied zum Normalmodus befindet sich der betroffene Tag nun auch außerhalb des Zeitschlitzes, der für die Kommunikation mit dem Access-Point bestimmt ist, in seinem Aktiv-Zustand und kann in der besagten verlängerten Empfangsdauer die Ortungssignale der anderen Tags empfangen. Die Länge der Ortungssignal-Empfangsdauer kann fix vordefiniert oder vom Access-Point für die betreffende Suche jeweils einstellbar sein. Der Ablauf der Ortungssignal-Empfangsdauer kann jedoch auch zu einem zutreffenden Zeitpunkt durch ein Kommando oder eine Statusmeldung verursacht durch den Access-Point oder einen der Tags angezeigt werden. Der Zeitpunkt des Starts der Ortungssignal-Empfangsdauer kann dem Zeitpunkt des Starts des Aussendens des Ortungssignals entsprechen, so wie dies vorangehend erörtert wurde, jedoch auch für einen früheren oder späteren Zeitpunkt festgelegt sein.

Als besonders vorteilhaft hat sich erwiesen, wenn die Ortungssignal-Empfangsdauer so bemessen wird, dass alle an der Suche des positionsunbekannten Funk-Tags beteiligten positionsbekannten Funk-Tags ihr Ortungssignal innerhalb der Ortungssignal-Empfangszeitdauer zumindest einmal aussenden können, bevorzugt jedoch mehrmals. Dem positionsunbekannten Tag kann zur Festlegung der Ortungssignal-Empfangsdauer bereits mit der Übermittlung des Ortungsbefehls ein einzustellender Wert für die Ortungssignal-Empfangsdauer übermittelt werden. Bevorzugt wird beim Start der Ortungssignal-Empfangszeitdauer das Zeitschlitzkommunikationsverfahren verlassen. Die eingestellte Ortungssignal-Zeitdauer kann einen beliebigen Wert aufweisen, sie kann jedoch, um eine möglichst rasche Re-Synchronisation des Systems nach Ablauf der Ortungssignal-Empfangszeitdauer zu ermöglichen, bevorzugt ein Vielfaches der Dauer eines Zeitschlitzes des Zeitschlitzkommunikationsverfahrens sein. Nach dem Start der Ortungssignal-Empfangsdauer senden alle mit dem Aussenden des Ortungssignals beauftragten Tags ihr Ortungssignal zu selbst festgelegten Zeitpunkten mit der zuvor definierten Häufigkeit aus. So kann z.B. für einen bestimmten Tag das Aussenden in der Ortungssignal-Empfangszeitdauer N-mal (z.B. 50 mal) geplant sein und der betreffende Tag verteilt das Auftreten des jeweiligen Ortungssignals zufällig innerhalb der zur Verfügung stehenden Zeitspanne des Ortungssignal-Empfangszeitdauer. Dies führt bei dem empfangenden Tag zu einer statistischen Verteilung von empfangenen Ortungssignalen und zugehörigen Empfangsqualitäten und erlaubt es dem empfangenden Tag offensichtlich unbrauchbare Ortungssignale zu erkennen und zu eliminieren.

Nach Ablauf der Ortungssignal-Empfangszeitdauer re-synchronisieren sich alle an der Suche beteiligten Tags wieder mit dem Zeitschlitzkommunikationsverfahren.

Um die empfangenen Ortssignale für die Bestimmung der Position benutzen zu können, ist es von Vorteil, wenn jener zum Empfangen des Ortungssignals bestimmte Funk-Tag, insbesondere der positionsunbekannte Funk-Tag, für jedes während der Ortungssignal-Empfangszeitdauer empfange Ortungssignal das Datenpaar zur späteren Verwendung speichert. Zur weiteren Verwendung können die gespeicherten Datenpaare beispielsweise hinsichtlich der festgestellten Empfangsqualität absteigend sortiert werden. Soweit es die Rechenleistung der Logikschaltung zulässt, kann dies bereits sukzessive während der Ortungssignal-Empfangsdauer beim Empfang eines neuen Ortungssignals geschehen, anderenfalls erst nach Ablauf besagt Ortungssignal-Empfangsdauer oder auch zu einem späteren Zeitpunkt ausgelagert an die Datenverarbeitungseinrichtung.

Um eine möglichst rasche, effiziente und ungestört Sammlung aller empfangbaren Ortungssignale sicherzustellen, ist es von Vorteil, wenn jener zum Empfangen des Ortungssignals bestimmte Funk-Tag, insbesondere der ortsunbekannte Funk-Tag, erst nach Verstreichen der Ortungssignal-Empfangsdauer ein oder mehrere gespeicherte Datenpaare aussendet, wobei diese Datenpaare über den Access-Point hin zur Datenverarbeitungseinrichtung kommuniziert werden, wo die finale Ortung stattfinden kann. Das Aussenden der Datenpaare kann innerhalb einer vordefinierten Übermittlungs-Zeitdauer erfolgen, was Teil der Implementierung des Ortungsmodus sein kann. Die Übermittlungs-Zeitdauer kann ebenso wie die Ortungssignal-Empfangsdauer ein Vielfaches der Dauer eines Zeitschlitzes für eine Kommunikation im Normalmodus betragen. Dieser Fall kann auch im Suchmodus implementiert sein, damit keine Störungen durch Funksignale bzw. Kollisionen mit Funksignalen positionsbekannter Tags im Funkverkehr mit dem Access-Point auftreten, sich also die positionsbekannten Tags ruhig verhalten und keine Signale senden. Erst nach abgeschlossener Übermittlung der Datenpaare kann sowohl der Suchmodus als auch der Ortungsmodus verlassen werden und der Normalmodus wieder eingenommen werden. Andererseits ist es auch möglich, dass nach abgeschlossener Aussendung aller Ortungssignale oder in anderen Worten nach Ablauf der Ortungssignal-Empfangszeitdauer und Re-synchronisation für die an der Suche beteiligten Tags der Normalmodus für alle beteiligten Tags eingenommen wird und die Übermittlung der Datenpaare an die Datenverarbeitungseinrichtung im Normalmodus in dem jeweiligen vorbestimmten Zeitschlitz stattfindet. In dieser Variante ist eine möglichst rasche Wiederherstellung der normalen Betriebsbedingungen für alle beteiligten Tags sichergestellt.

Gemäß einem weiteren Aspekte der Erfindung weist der positionsunbekannte Funk-Tag eine Anzeigeeinrichtung auf, wobei mit ihrer Hilfe eine Statusinformation visualisiert wird, die seinen internen oder systemweiten Status als zu ortender positionsunbekannter Tag repräsentiert. Bei dieser Ausführungsform kann der Tag zum Beispiel ein Bestandteil eines elektronischen Preisschilds (auch Electronic Shelf Label, kurz ESL genannt) sein. Im Normalmodus werden mithilfe der Anzeigeeinrichtung Produktpreise oder das Produkt betreffende weitere Informationen angezeigt. Sobald die Logikstufe des Tags als Folge des empfangenen Ortungsbefehls ihren Betriebszustand vom Normalmodus in den Ortungsmodus ändert, wird dies mit Hilfe der Logikstufe in Form einer Statusinformationen, die insbesondere für einen Menschen lesbar ist, mithilfe der Anzeigeeinrichtung visualisiert. Auf einem Display der Anzeigeeinrichtung kann dann beispielsweise zu lesen sein: "Ortungsmodus aktiv". Zusätzlich können noch Anweisungen an Personen visualisiert werden, wie z.B. "Ich werde gesucht, bitte bringen Sie mich zur Kasse!". Für den Fall, dass die Statusinformationen für einen Menschen nicht lesbar sein soll, kann auch ein sogenannter QR-Code zum Einsatz kommen, der maschinell, zum Beispiel mit einem optischen Lesegerät zu verarbeiten ist. Die Anzeigeeinrichtung kann z.B. mit Hilfe von LCD-Technologie, bevorzugt jedoch auch Elektronic-Ink-Technologie (auch E-Ink als Synonym für elektronisches Papier genannt) realisiert sein.

Als besonders vorteilhaft hat es sich erwiesen, wenn, insbesondere einleitend, also zum Beispiel vor Aussendung des Suchbefehls und/oder des Ortungsbefehls, für die Funk-Tags eine Kalibrierungs-Kommunikation mit einem ortsbekannten Access-Point, dem die Funk-Tags zugeordnet sind, durchgeführt wird, wobei die Empfangsqualität für jeden involvierten Funk-Tag ermittelt wird und eine Beziehung zwischen ermittelter Empfangsqualität und der Position für den betreffenden positionsbekannten Funk-Tag definiert wird. Dies verbessert die Positionsbestimmung mit Hilfe der Ortungssignale, die vom positionsunbekannten Tag empfangen werden, weil die Empfangsqualität stark von der Umgebung des jeweiligen Tags abhängt. So sind beispielsweise im freien Feld Reichweiten von 100 Meter möglich, wohingegen in einem Geschäftslokal eine Reichweite von ca. 20 Meter wegen Reflexionen und/oder Abschirmung kaum überschritten wird.

Gemäß einem weitere Aspekt der Erfindung kommunizieren die Tags in einem Normalmodus mit einem Access-Point unter Benutzung eines Zeitschlitzkommunikationsverfahrens, wobei gemäß diesem Zeitschlitzkommunikationsverfahren in einer definierten Zeiteinheit eine definierte Anzahl von Zeitschlitzen zur Verfügung steht und einem der Zeitschlitze ein oder mehrere Funk-Tags zugeordnet ist/sind und jeder Funk-Tag in seinem Zeitschlitz individuell adressierbar ist, um Daten bzw. Kommandos von dem Access-Point zu empfangen und / oder Daten an den Access-Point zu senden, wobei der positionsunbekannte Tag und/oder zumindest ein positionsbekannter Tag das Zeitschlitzkommunikationsverfahrens verlässt/verlassen, um das Ortungssignal zu senden oder zu empfangen. Das Verlassen des Zeitschlitzkommunikationsverfahrens bedeutet, dass der betroffene Tag nun einem anderen Timing folgt. Das Ortungssignal kann folglich in einem anderen Zeitschlitz empfangen oder gesendet werden, dem der betroffene Tag im Normalmodus nicht zugeordnet ist. Ebenso kann die Systematik der Zeitschlitze vollständig aufgegeben werden und das Senden oder Empfangen währen einer Zeitspanne erfolgen, die nicht mehr einem Zeitschlitz entspricht, also z.B. wesentlich länger dauert. Diese Maßnahme trägt zur Systemeffizienz bei, weil der Suchvorgang relativ rasch abzuarbeiten ist und losgelöst vom starren Korsett des Timings des Zeitschlitzkommunikationsverfahrens möglichst viele Funk-Tags praktisch gleichzeitig im Schwarm an der Suche nach den vermissten Funk-Tag teilhaben können.

Nach dem Senden oder Empfangen des Ortungssignals treten die betroffenen Funk-Tags wieder dem Zeitschlitzkommunikationsverfahren bei und kehren in den Normalmodus zurück. Nach dem Beitreten stehe die Tags wieder zur Kommunikation mit dem Access-Point in jenem dem betroffenen Tag zugeordnetem Zeitschlitz zur Verfügung. Das Beitreten kann unmittelbar nach dem Ende des Suchvorgangs oder zu einem späteren Zeitpunkt erfolgen. So können die Funk-Tags nach Abschluss der Sende- und Empfangssequenz im Schlaf-Zustand bis zum Start des nächsten Zeitschlitzzyklus verharren, kurz vorher erwachen und den Aktiv-Zustand einnehmen, warten im Aktiv-Zustand bis sie Ihr Synchronisationssignal empfangen, mit dessen Hilfe sie den zugewiesenen Zeitschlitz identifizieren, und durch Re-Synchronisation in den Normalmodus zurück kehren. Im Fall, dass die Tags das Timing des Zeitschlitzkommunikationsverfahrens verlassen haben, um des Ortungssignal zu senden bzw. zu empfangen, ist es von Vorteil, wenn die Tags dazu ausgebildet sind, den frühestmöglichen Zeitpunkt zum Beitreten selbständig zu berechnen. Im System der Tags ist bei Verlassen des Zeitschlitzkommunikationsverfahrens bekannt:

- die Dauer D1 des Synchronisationszyklus (z.B. 15 Sekunden für alle Tags).
- den Zeitpunkt D2 des Begins des dem jeweiligen Tag zugeordneten Zeitschlitzes (z.B. 6,3 Sekunden für Tag x).
- den Startzeitpunkt D3 der Ortungssignal-Empfangsdauer im Synchronisationszyklus (z.B. 13 Sekunden für alle Tags).
- die Dauer D4 der Ortungssignal-Empfangsdauer (z.B. 3 Sekunden für Tag x)
- die Dauer D5 der Vorlaufzeit, die gewählt wird, um den betreffenden (jeden) Tag rechtzeitig vor dem Auftreten jenes Zeitschlitzes, dem der Tag zugeordnet ist, aus dem Schlaf-Zustand aufzuwecken (z.B. 1 Sekunde für alle Tags). Mit diesen fünf Parametern D1 - D5 lässt sich der optimale, nämlich nächstmögliche Zeitpunkt berechnen, um nach dem Ende der Ortungssignal-Empfangsdauer rechtzeitig vor dem Auftreten des nächsten Zeitschlitzes, dem der jeweilige Tag zugeordnet ist, den betreffenden Tag aufzuwecken und durch Empfang der Synchronisations-Signalstruktur wieder mit dem Timing des Zeitschlitzkommunikationsverfahrens zu re-synchronisieren. Zur Berechnung der Verweildauer D6 im Schlaf-Zustand nach Ablauf der Ortungssignal-Empfangsdauer dient die nachfolgenden Formel 1.

$$\text{Formel 1:} \quad D6 = D1 - ((D3 - D2) + D4) - D5$$

Im vorliegenden Beispiel berechnet sich für D6 ein Wert von 4,3 Sekunden. Da im diesem Bespiel die Ortungssignal-Empfangsdauer im ersten Synchronisationszyklus bei Sekunde 13 beginnt und die Dauer D4 der Ortungssignal-Empfangsdauer 3 Sekunden beträgt, reicht die Ortungssignal-Empfangsdauer 1 Sekunde lang in den nächsten (zweiten) Synchronisationszyklus hinein. Der Parameter D6 besagt nun, dass im Anschluss an die erste Sekunde des nächsten (zweiten) Synchronisationszyklus 4,3 Sekunden zu warten ist, also bis zur absoluten Zeitmarke 5,3 Sekunden in diesem Synchronisationszyklus, bis der betroffene Tag x aus dem Schlaf-Zustand aufwacht. Dieser Tag x wacht somit 1 Sekunde vor dem Auftreten des für ihn relevanten nächstmöglichen Zeitschlitzes auf. In Analogie zum ersten Synchronisationszyklus beginnt der relevante Zeitschlitz bei der absoluten Zeitmarke 6,3 Sekunden im zweiten Synchronisationszyklus. Der Zeitpunkt des rechtzeitigen Aufwachens muss jedoch nicht 1 Sekunde betragen, sondern kann in Abhängigkeit von zulässigen Systemgrenzen auch höhere oder geringer Werte, wie z.B. 0,5 oder 0,2 oder auch 0,1 Sekunden annehmen. Ein möglichst rascher Wiedereintritt in das Timing des Zeitschlitzkommunikationsverfahrens bringt zudem den Vorteil mit sich, dass sich die Drift der internen Zeitbasis der an der Suche beteiligten Tags ebenso wie die Drift jener Tags, die zwar dem die Suche auslösenden Access-Point zugeordnet sind, jedoch nicht aktiv an der Suche teilnehmen sondern während der Suche im Schlafmodus verharren, nicht ausufert.

Gemäß einem weiteren Aspekt der Erfindung wird mit Hilfe einer Datenverarbeitungseirichtung besagte Gruppe von Funk-Tags aus der Gesamtheit der Tags eines Systems selektiert. Da einem bestimmten Access-Point immer eine Anzahl von Tags zugeordnet ist, kann durch eine Reduktion auf eine Gruppe von Funk-Tags mit geringerer Anzahl als die dem Access-Point zugeordnete Anzahl an Tags die Effizienz und auch die Effektivität der Suche gesteigert werden. Diese Maßnahme ist zudem auch äußerst energieeffizient für die nicht beteiligten Funk-Tags.

Als besonders vorteilhaft hat es sich erwiesen, wenn der Funk-Tag einen Sensor zum Abgeben eines Sensorsignals, das anzeigt, dass der Funk-Tag von einem anderen Gegenstand, insbesondere einem Regal, entfernt wurde, aufweist, und die Logikstufe bei einem Vorliegen des Sensorsignals zum Abgeben einer Statusnachricht über die Funk-Kommunikationsstufe ausgebildet ist, wobei die Statusnachricht das festgestellte Entfernen von dem anderen Gegenstand repräsentiert. Diese Ausbildung des Tags erlaubt es dem Tag, das Verfahren zum Orten seiner eigenen Position von sich selbst aus auf automatische Weise zu starten. Dabei kann die Statusnachricht im nächsten dem Tag zugeordneten Zeitschlitz an den Access-Point kommuniziert werden, dem der Tag zugeordnet ist, und dort autonom oder nach Abstimmung mit dem für die Verwaltung des Systems zuständigen Server das Verfahren zum Orten des positionsunbekannten Funk-Tags gestartet werden. Der Sensor kann mit Hilfe eines Stifts (Pins) realisiert sein, dessen Eindringtiefe in ein Gehäuse des Tags automatisch festgestellt wurde, wie z.B. mit einem Kontakt, der entweder geschlossen oder geöffnet ist. Der Sensor kann jedoch auch auf kapazitive oder induktive oder jede andere geeignete Weise den Verlust des Kontakts mit dem Gegenstand erkennen. Das Auftreten des Sensorsignals kann z.B. mechanisch oder elektronische gespeichert werden, damit es bis zum nächsten Aufwachen des Tags erhalten bleibt. Das Sensorsignal kann jedoch auch dazu benützt werden, um den Tag pro aktiv aufzuwecken. Diese Maßnahmen verhindern nachhaltig eine Manipulation des einmal festgestellten Kontaktverlusts.

Gemäß einem weiteren Aspekt der Erfindung kann das System derart ausgebildet sein, dass bei erfolgter Ortung eines positionsunbekannten Funk-Tags eine Anzahl positionsbekannter Funk-Tags, die ortsbenachbart zu dem georteten Funk-Tag positioniert sind, veranlasst wird, die Ortung des positionsunbekannten Funk-Tags in ihrer Umgebung mit Hilfe Ihrer Anzeigeeirichtung anzuzeigen, z.B. durch Anzeige eines Symbols, beispielsweise eines Kreises, oder eines Blinkverhaltens usw. Somit kann mit dieser selektieren Gruppe von positionsbekannten Funk-Tags einerseits der Systemstatus betreffend den Abschluss der Ortung des ortunbekannten Funk-Tags visualisiert werden und andererseits, bedingt durch ihre örtliche Nähe zu dem ortsunbekannten Funk-Tag, der Vorgang des manuellen Auffindens erleichtert werden. Die selektierten, ortsbekannten Funk-Tags erleichtern mit Hilfe ihrer Anzeigeeinrichtung einer suchenden Person jenen Bereich einzugrenzen, in dem der ortsunbekannte Funk-Tag aufzufinden ist. Die suchende Person wird folglich zum Zielgebiet hingeleitet.

Diese und weitere Aspekte der Erfindung ergeben sich durch die nachfolgend erörterten Figuren.

Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:

Fig. 1 ein erfindungsgemäßes System;
Fig. 2 ein Blockschaltbild eines erfindungsgemäßen Funk-Tags;
Fig. 3 ein Flussdiagramm eines erfindungsgemäßen Verfahrens;
Fig. 4 eine Datenstruktur gemäß einem ersten Ausführungsbeispiel zum Orten eines Funk-Tags;
Fig. 5 ein Zustandsdiagramm für Tags gemäß einem zweiten Ausführungsbeispiel des Verfahrens;
Fig. 6 eine Datenstruktur gemäß einem zweiten Ausführungsbeispiel zum Orten eines Funk-Tags;
Fig. 7 einen ersten Anwendungsfall der Erfindung;
Fig. 8 einen zweiten Anwendungsfall der Erfindung;
Fig. 9 einen dritten Anwendungsfall der Erfindung.

Beschreibung der Ausführungsbeispiele

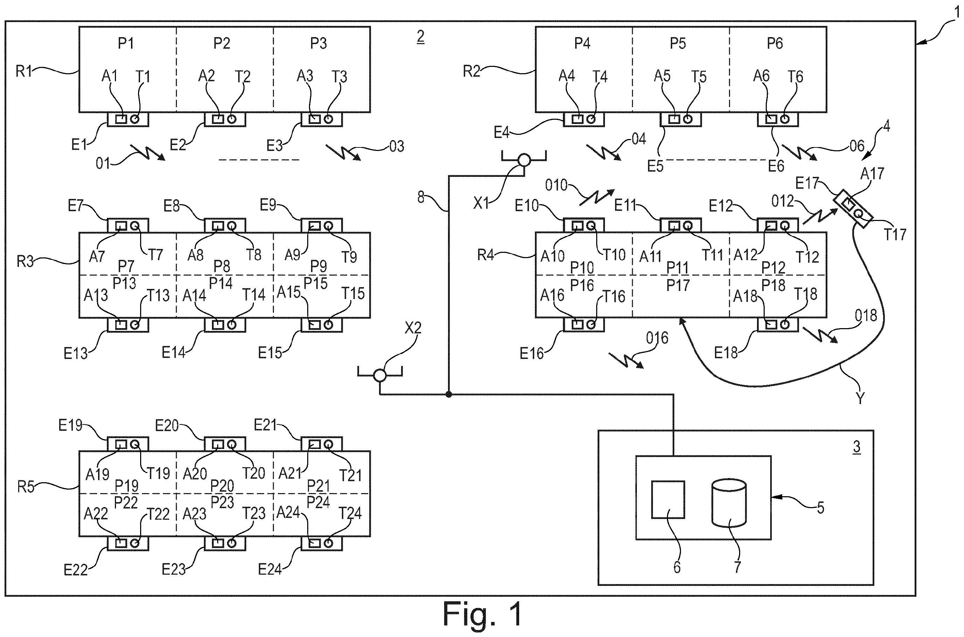

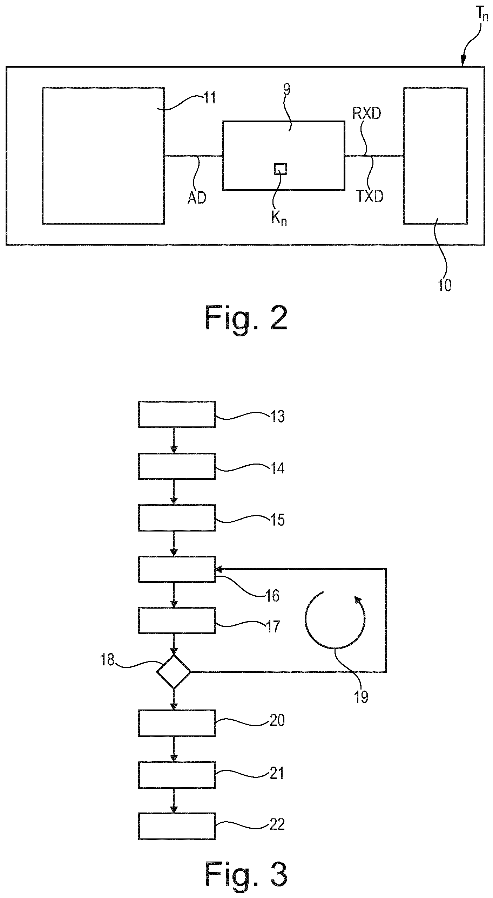

In der Figur 1 ist in einem Geschäftslokal 1, das sich in einen Verkaufsraum 2 und einen Administrationsraum 3 gliedert, ein System 4 dargestellt. Das System 4 weist eine Gruppe von Funk-Tags, kurz Tags, T1 - T24 auf. Jeder Tag Tn speichert in Form von Daten eine für den jeweiligen Tag Tn individuelle Kennung K1 - K24 (nicht in Fig. 1 visualisiert, siehe jedoch Fig. 2), um ihn eindeutig zu identifizieren. Jeder Tag Tn bildet einen Bestandteil eines elektronischen Preisschildes E1 - E24. Jedes Preisschild En weist eine Anzeigeeinrichtung A1 - A24 auf. Jedes Preisschild En - mit Ausnahme des siebzehnten Preisschilds E17 - ist an einer Befestigungsschiene eines Regals R1 - R5 befestigt. Jedes Regal Rn beherbergt individuelle Produkte P1 - P24 und die Anzeigeeinrichtungen An zeigen die jeweiligen Preise für die Produkte Pn an. Das siebzehnte Preisschild E17 wurde von seinem planmäßigen, siebzehnten Platz (angezeigt durch den Pfeil Y) entfernt und befindet sich am Fußboden in der Nähe des fünften Regals R5. Das System 4 weist weiterhin einen Server 5 auf, der eine Datenverarbeitungseinrichtung bildet und Verarbeitungsmittel 6 sowie Speichermittel 7 aufweist. Das System 4 weist weiterhin zwei Access-Points X1 und X2 auf, die über ein kabelgebundenes Netzwerk 8 mit dem Server 5 verbunden sind.

Bevor die Tags Tn im System 4 benutzt werden können, müssen Sie manuelle an den für sie vorgesehenen Positionen der Regale Rn befestigt werden und sich bei dem System 4 anmelden. Dabei empfangen die Tags Tn Funksignale von den Access-Points Xn und melden sich in Abhängigkeit von der Empfangsqualität der Funksignale bei dem Access-Point Xn an, für den die beste Empfangsqualität vorliegt. Im vorliegenden Fall sei angenommen das dem ersten Access-Point X1 die Tags T1-T6, T10-T12 und T16-T18, und dem zweiten Access-Point X2 die Tags T7-T9, T13-T15 und T19-T24 zugeordnet sind. Die Kommunikation, mit deren Hilfe von einem Access-Point Xn Preise oder andere für den Kunden relevante Informationen an die Tags Tn in ihrem Normalmodus kommuniziert werden, erfolgt mit Hilfe eines Zeitschlitzkommunikationsverfahrens. Dabei kommen innerhalb von n Sekunden m Zeitschlitze zum Einsatz. Jeder der Tags Tn ist einem Zeitschlitz zugeordnet, wobei einem bestimmten Zeitschlitz auch mehrere Tags Tn zugeordnet sein können. Die Tags Tn sind außerhalb ihres Zeitschlitzes in ihrem Schlaf-Zustand, sowie knapp vor ihrem Zeitschlitz und in ihrem Zeitschlitz in ihrem Aktivzustand. Durch das rechtzeitige Aufwachen vor dem betreffenden Zeitschlitz können sie ihre innere Uhr mit dem Zeitraster des Zeitschlitzkommunikationsverfahrens synchron halten und somit zuverlässig in ihrem Zeitschlitz mit dem Access-Point Xn Daten übertragen, soweit dies vom Access-Point Xn verlangt wird.

Mit Hilfe der Speichermittel 6 wird in digitaler Form 1 ein Planogramm gespeichert. Ein Planogramm ist eine schematische Zeichnung einer Einzelhandel-Ladeneinrichtung, die Produktplatzierungen illustriert. Das gespeicherte Planogramm repräsentiert daher in Form einer digitalen Liste bzw. einer Datenbank die Beziehung zwischen einem Regalplatz, einem Produkt, einem EAN-Code und einer Kennung Kn des jeweils zugeordneten Tags Tn des elektronischen Preisschilds En. Zum Herstellen dieser Beziehung können beispielsweise tragbare EAN-Code-Leser verwendet werden, mit deren Hilfe der EAN-Code eines Produktes Pn eingelesen, und an den Server 5 gesendet wird und bei dem Server 5 einem Tag Tn zugeordnet wird.

Die Tags Tn sind alle identisch aufgebaut. In der Figur 2 ist einer der Tags Tn strukturell visualisiert. Der Tag Tn weist eine Logikstufe 9, eine Funk-Kommunikationsstufe 10 und eine Anzeigeeinrichtung 11 auf. Die Funk-Kommunikationsstufe 10 bildet die analoge Schnittstelle, mit deren Hilfe Funksignale mit den Access-Points Xn ausgetauscht werden können. Entsprechende Empfangs- und/oder Sende-Daten RXD, TXD werden zwischen der Funk-Kommunikationsstufe 10 und der Logikstufe 9 kommuniziert.

Die Logikstufe 9 verarbeitet Daten und Befehle, im vorliegenden Fall insbesondere einen Suchbefehl und einen Ortungsbefehl und stellt neben einem Normalmodus auch einen Suchmodus und einen Ortungsmodus bereit. Beim Empfangen des Suchbefehls wird von dem Normalmodus in den Suchmodus umgeschaltet. Beim Empfangen des Ortungsbefehls wird von dem Normalmodus in den Ortungsmodus umgeschaltet. In dem Suchmodus wird ein Ortungssignal On generiert, das die Kennung Kn des jeweiligen Tags Tn aufweist, und in jenem dem jeweiligen Tag Tn zugewiesenen Zeitschlitz als Funksignal ausgesandt. Danach wird von dem Suchmodus in den Normalmodus gewechselt. In dem Ortungsmodus wird eine Empfangsbereitschaft zum Empfangen von Ortungssignalen On während einer Ortungssignal-Empfangsdauer hergestellt, die dann vorliegt, sobald das Ortungssignal ausgesendet wird. Jedes empfangene Ortungssignal On wird hinsichtlich seiner Empfangsqualität Qn und der mit dem Ortungssignal On übermittelten Kennung Kn ausgewertet und ein Datenpaar Dn aus Kennung Kn und Empfangsqualität Qn gespeichert. Nach Verstreichen der Ortungssignal-Empfangsdauer werden die gespeicherten Datenpaare mit fallender Empfangsqualität Qn gereiht und mit Hilfe von Funksignalen an den Server 5 kommuniziert, wo eine weitere Auswertung erfolgt.

Die Anzeigeeinrichtung 11 basiert auf extrem energiesparender Elektronic-Ink-Technologie (auch E-Ink als Synonym für elektronisches Papier genannt) und wird durch die Logikstufe 9 mit Anzeigedaten AD angesteuert, die in eine visuell wahrnehmbare Information umgesetzt werden.

In Bezug auf die Figur 1 sei nun angenommen, dass das siebzehnte Preisschild E17 von seinem planmäßigen, siebzehnten Platz (angezeigt durch den Teil Y) entfernt wurde und sich nun am Fußboden, jedoch noch in der Nähe des vierten Regals R4 und auch im Kommunikationsbereich des ersten Access-Points X1 befindet. Einem Mitarbeiter ist bei einer routinemäßigen visuellen Kontrolle der Preisschilder En aufgefallen, dass das siebzehnte Preisschild E17 abgängig ist. Er scannt mit seinem EAN-Scanner den EAN-Produktcode des Produkts P17, überträgt den EAN-Produktcode über eine konventionelle WLAN-Infrastruktur (nicht dargestellt; eine von der Kommunikationsinfrastruktur der Access-Points unterschiedliche Infrastruktur) des Geschäftslokals 1 an den Server 5 und startet eine Suchanfrage bei dem Server 5. Bei dem Server 5 wird der siebzehnte Tag T17 als zu suchender Tag identifiziert. Da der siebzehnte Tag T17 nach wie vor mit dem ersten Access-Point X1 in Kommunikationsverbindung steht, beschränkt sich die durch den Server 5 zu startende Suche auf die Involvierung der Tags T1-T6, T10-T12 und T16-T18. Für diese Teilgruppe von Tags Tn wird nun ein Verfahren 12 zum Orten des siebzehnten Tags T17 gestartet, wobei nachfolgend auf das Flussdiagramm gemäß der Figur 3 erwiesen ist.

Das Verfahren 12 wird in einem Block 13 gestartet und es sei angenommen, dass sich alle Tags Tn im Normalmodus befinden. In einem Block 14 wird an den siebzehnten Tag T17 der Ortungsbefehl gesendet, was im zutreffenden Zeitschlitz für die Kommunikation mit dem siebzehnten Tag T17 erfolgt. Dies bewirkt bei dem Tag T17 ein Umschalten von dem Normalmodus in den Ortungsmodus. Der sich im Ortungsmodus befindliche Tag 17 visualisiert seinen Status mit Hilfe der Anzeigeeinrichtung A17, wo als Statusinformation "Ortungsmodus aktiv" angezeigt wird. In einem Block 15 wird an die Tags T1-T6, T10-T12, T16 und T18 der Suchbefehle gesendet, was im zutreffenden Zeitschlitz für den jeweiligen Tag T1-T6, T10-T12, T16 und T18 erfolgt. Dies bewirkt bei den Tags T1-T6, T10-T12, T16 und T18 ein Umschalten von dem Normalmodus in den Suchmodus. Da es sich im vorliegenden Fall um ein Zeitschlitzkommunikationsverfahren handelt, zeigen die Blöcke 14 und 15 der Figur 3 mehr einen logischen Zustand und nicht zwingend die zeitliche Abfolge beim Umschalten vom Normalzustand in den Ortungsmodus bzw. den Suchmodus an.

Im Folgenden sei davon ausgegangen, dass das Aussenden des Ortungssignals durch den jeweiligen Tag Tn strikt gemäß dem Zeitraster des Zeitschlitzkommunikationsverfahrens abläuft. Lediglich der zu suchende, siebzehnte Tag T17 befindet sich während der Gesamtanzahl der Zeitschlitze im Ortungsmodus. Das Aussenden der Ortungssignale durch die beteiligten Tags startet, nachdem alle beteiligten Tags ihren betreffenden Befehl (Ortungsbefahl, Suchbefehl) erhalten und verarbeitet haben mit Beginn des nächsten Zeitschlitzzyklus.

In einem Block 16 wird von dem ersten, im Suchmodus betriebenen Tag T1 in dem ihm zugewiesenen Zeitschlitz das erste Ortungssignal O1 ausgesendet. In einem Block 17 wird dieses erste Ortungssignal O1 - soweit physikalisch möglich - von dem im Ortungsmodus betriebenen Tag T17 empfangen, hinsichtlich der ersten Empfangsqualität Q1 und der Kennung K1 ausgewertet und ein erstes Datenpaar D1 aus Empfangsqualität Q1 und der Kennung K1 gespeichert. Bei einem Block 18 wird bei dem Tag 17 geprüft, ob die Ortungssignal-Empfangsdauer bereits verstrichen ist. Soweit dies nicht der Fall ist, wird in dem Verfahren 12 zu Block 16 verzweigt, wobei das nächste Ortungssignal O2 von dem Tag T2 in dem ihm zugeordneten Zeitschlitz ausgesandt wird. In dem Block 17 wird dieses zweite Ortungssignal O2 - soweit physikalisch möglich - von dem im Ortungsmodus betriebenen Tag T17 empfangen, hinsichtlich der zweiten Empfangsqualität Q2 und der Kennung K2 ausgewertet und ein zweites Datenpaar D2 aus Empfangsqualität Q2 und der Kennung K2 gespeichert. Eine aus den Blöcken 16, 17 und 18 gebildete Schleife 19 wird so oft durchlaufen, bis alle an der Suche des im Ortungsmodus betriebenen Tags T17 beteiligten Tags Tag T1-T6, T10-T12, T16 und T18 ihr jeweiliges Ortungssignal O1-O6, O10-O12, O16 und O18 in den ihnen jeweils zugeordneten Zeitschlitzen ausgesandt haben, oder in anderen Worten die Ortungssignal-Empfangsdauer verstrichen ist. Im vorliegenden Fall wurde festgesetzt, dass die Ortungssignal-Empfangsdauer genau einen Zeitschlitzzyklus lang ist. Da im vorliegenden Fall von dem Zeitraster des Zeitschlitzkommunikationsverfahrens Gebrauch gemacht wurde, ist zumindest für die das Ortungssignal sendenden Tags T1-T6, T10-T12, T16, T18 keine Re-Synchronisation nötig. Lediglich Tag T17 muss sich neu synchronisieren.

Die Ortungssignal-Empfangsdauer kann sich jedoch auch über mehrere Zeitschlitzzyklen erstrecken.

Wie vorangehend erörtert dient auch in diesem Zusammenhang die Visualisierung in Form der Blöcken 16, 17 und 18 mehr der logischen Strukturierung des Verfahrens als der Wiedergabe der zeitlichen Abläufe.

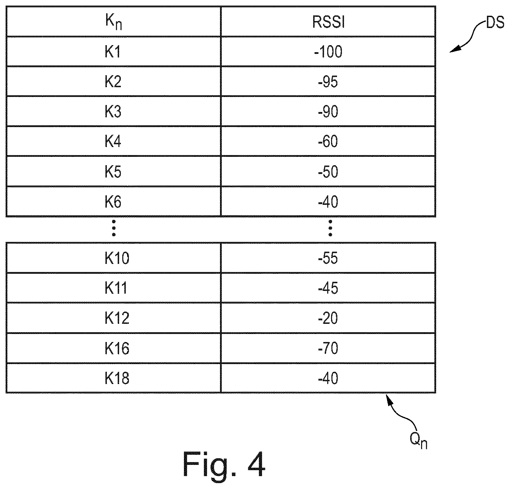

Die in dem siebzehnten Tag T17 gespeicherte Liste der Datenpaare Dn bildet eine Datenstruktur DS zur Ermittlung bzw. Eingrenzung der Position des diese Datenstruktur DS speichernden Tags T17. Die gespeicherte Datenstruktur DS ist in der Figur 4 abgebildet. Die Datenstruktur DS weist in einer ersten Spalte die Kennungen Kn und in einer weiteren Spalte die Werte auf, welche die Empfangsqualität En repräsentieren, z.B. den RSSI Wert, auf. Der jeweilige Wert des RSSI ist für in Bezug auf die Position des Tags T17 weiter weg liegende Tags Tn und für stärker abgeschirmte Tags Tn (z.B. hinter Regalen und Produkten verborgene Tags) geringer und für näher an dem Tag 17 liegende und / oder weniger stark abgeschirmte Tags Tn höher.

In weitere Folge überträgt der siebzehnte Tag T17 die gespeicherten Datenpaare Dn an den Server 5. In Abhängigkeit von der Anzahl der gespeicherten Datenpaare Dn erfolgt dies in einem einzigen ihm zugewiesenen Zeitschlitz oder in einer Anzahl solcher zeitversetzt auftretender Zeitschlitze.

Bei einem Block 21 wird auf Grundlage der an den Server 5 übermittelten Datenpaare Dn und der bekannten Positionen der Tags T1-T6, T10-T12, T16 und T18 die Position des positionsunbekannten, siebzehnten Tags T17 bestimmt oder zumindest eingegrenzt. Durch Sortieren der übermittelten Datenstruktur DS für abfallende Werte des RSSI wird festgestellte, dass sich der gesuchte / vermisste Tag T17 im Bereich zwischen Tags T6 und T12, jedoch rechts vom Tag T12 und näher bei dem Tag T12 als bei dem Tag T6 befinden muss.

Die so ermittelte Position des siebzehnten Tags T17 wird einer Mitarbeiterin / einem Mitarbeiter z.B. über das mobile EAN-Code-Lesegerät mitgeteilt, also bekanntgegeben, sodass sie / er den Tag T17 möglichst zielgerichtet aufspüren und an seinem planmäßigen Platz am Regal 4 im Bereich des Produkts P17 befestigen kann. Sobald dort fixiert, kann der Mitarbeiter mit Hilfe seines z.B. EAN-Code-Lesegeräts eine Kalibrierungssequenz auslösen, in der die für die Kommunikation mit dem siebzehnten Tag 17 relevanten Kommunikationsparameter (z.B. RSSI und / oder Link Quality) für seine Sollposition erfasst werden.

Die mit der Anzeigeeinrichtung bereitgestellte Statusinformation "Ortungsmodus aktiv" kann den manuellen Vorgang des Aufspürens beschleunigen, und zwar in solchen Fällen, in denen das elektronische Preisschild E17 bewusst, also vorsätzlich oder versehentlich an einem ihm planmäßig nicht zugewiesenen Regalposition befestigt ist. Zudem stellt die bereitgestellte Statusinformation ("Ortungsmodus aktiv" ohne weitere Produktangaben oder Preisinformation) sicher, dass ein Kunde durch solche falsch positionierten Preisschilder nicht in die Irre geführt wird. Diese Anzeige der Statusinformation kann auch im bereits wieder eingenommenen Normalmodus beibehalten werden.

Die vorangehend im Detail erörterten erfindungsgemäßen Maßnahmen können auch zur automatischen Verifizierung der Position individueller Tags Tn eingesetzt werden. Dem Server 5 ist die Sollposition jedes Tags Tn in dem in der Figur 1 visualisierten Geschäftslokal 1 und somit auch die Nähe bzw. Entfernung der einzelnen Tags Tn zueinander bekannt. Der Server 5 steuert automatisch jeweils einen der Tags Tx (mit x = 1 ... m; m = Gesamtzahl der Tags) in den Ortungsmodus und alle anderen Tags Tn (n = 1 ... m ohne x) in den Suchmodus und empfängt und verarbeitet nach Durchlauf des Verfahrens zum Orten des Tags Tx die jeweilige Datenstruktur DS. Mithilfe der erhaltenen Datenstruktur DS wird beim Server 5 geprüft, ob der Tag Tx mit ausreichender Wahrscheinlichkeit an seiner Sollposition lokalisiert ist. Wenn die Wahrscheinlichkeit nicht ausreicht, weil z.B. bei einer zu erwartenden Konfiguration von benachbarten Tags Tn eine zu hohe Abweichung von den Sollwerten der Empfangsqualität für die Tags Tn vorliegt oder grundsätzlich eine unerwartete Konfiguration von benachbarten Tags Tn festgestellt wird, kann der betroffene Tag Tx z.B. zu einem späteren Zeitpunkt durch eine Mitarbeiterin / einen Mitarbeiter aufgespürt werden. Diese automatische Verifizierung der Position aller Tags Tn kann zum Beispiel periodisch jeden Wochentag außerhalb der Geschäftsöffnungszeiten durchgeführt werden.

Die Tags Tn können jedoch auch dazu ausgebildet sein, selbständig festzustellen, dass sie von einem Regal Rn entfernt wurden. Dies kann mit Hilfe eines Sensors (nicht dargestellt, z.B. in das elektronische Preisschild En integriert) geschehen, der mit der Logikstufe 9 gekoppelt ist. Sobald der Tag Tn in seinem Normalmodus vom Schlaf-Zustand in den Aktiv-Zustand wechselt, wird der Sensorstatus des Sensors geprüft. Zeigt der Sensorstatus an, dass die Verbindung zum Regal Rn verloren gegangen ist (z.B. zum Zeitpunkt des Einnehmen des Aktiv-Zustands oder bereits davor) meldet der betroffene Tag Tx dies im nächsten für seine Kommunikation vorgesehenen Zeitschlitz dem Server 5. Danach wird für den betroffenen Tag Tx das Verfahren zum Orten des positionsunbekannten Tags Tx durchlaufen. Die vom Tag Tx erhaltenen Datenstruktur DS wird beim Server 5 wie vorangehend erörtert zur Lokalisierung des Tags Tx verwendet.

Das Verfahren zum Orten des positionsunbekannten Tags Tx kann jedoch auch dann durch den Server 5 automatisch gestartet werden, wenn bei dem Server 5 festgestellt wird, dass sich der Tag Tx bei einem Access-Point Xn zur Kommunikation angemeldet hat, der aufgrund seiner Position mit großer Wahrscheinlichkeit gar nicht für eine Kommunikation mit dem Tag Tx zur Verfügung stehen sollte.

Die vorangehend erörterten erfindungsgemäßen Maßnahmen können jedoch auch zur Verfolgung eines sich bewegenden positionsunbekannten Tags Tx verwendet werden. Bei dieser Anwendung ist eine Anzahl positionsbekannter Tags Tn an bekannten Positionen (z.B. in periodischen Abständen) in einem Raum positioniert (z.B. am Fußboden oder an der Decke befestigt bzw. dort eingebaut). Der positionsunbekannte Tag Tx ist beispielsweise an einem Einkaufswagen befestigt, der von einer Person durch das Geschäftslokal bewegt wird. Zur Verfolgung der Bewegung des Einkaufswagens wird zu bestimmten Zeitpunkten (z.B. alle 10, 20, 30 oder 60 Sekunden) das Verfahren zum Orten des Tags Tx gestartet und danach durchlaufen, sodass z.B. in periodischen Abständen eine Datenstruktur DS von dem zu ortenden Tag Tx an den Server 5 übermittelt wird und dort aufgrund der sich bei der Bewegung ändernden Konfiguration von nächsten Nachbarn von Tags Tn die Bewegungsbahn des Einkaufswagens und letztendlich der Person zur Verfügung steht. Ist der positionsunbekannte Tag Tx ähnlich einem der elektronischen Preisschilder mit einer Anzeigevorrichtung gekoppelt, lassen sich insbesondere bei einer Bewegung in einem Geschäftslokal orts- oder vielmehr produktbezogene Informationen im Kontext der jeweiligen festgestellten Position präsentieren. In einer Erweiterung dieser Anwendung kann auch vorgesehen sein, dass der am Einkaufswagen befestigte positionsunbekannte Tag Tx eine Schnittstelle zur Kommunikation mit einem anderen mobilen Gerät, zum Beispiel einem Mobiltelefon oder Smartphone der Person aufweist. Über diese Schnittstelle kann dem Tag Tx eine Einkaufsliste übermittelt werden, die in weiterer Folge über den jeweiligen Access-Point Xn dem Server 5 verfügbar gemacht wird. Der Server 5 kann aufgrund der festgestellten Position bzw. Bewegung des Tags Tx Navigationsinformationen auf der mit dem Tag Tx gekoppelten Anzeigevorrichtung bereitstellen und auf diese Weise die Person beim Abwickeln der Einkäufe unterstützen.

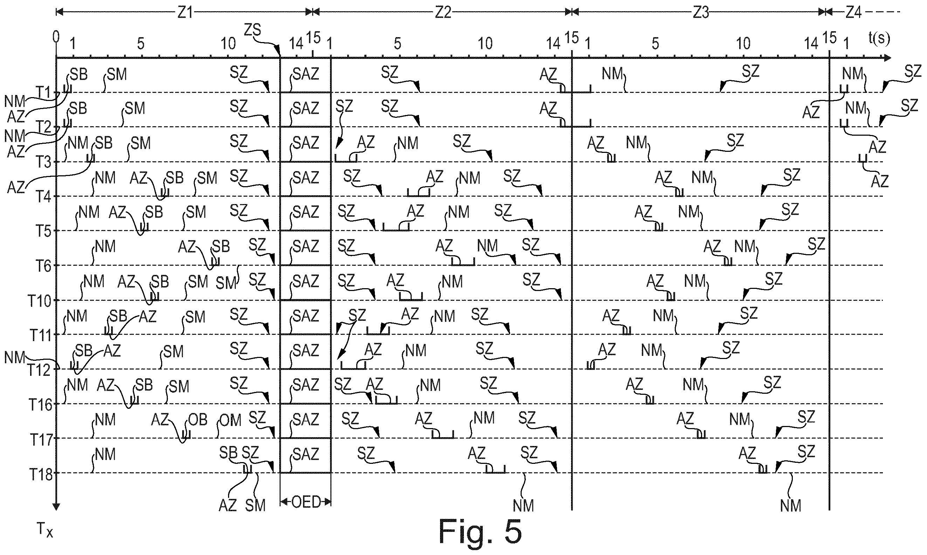

Mit Hilfe der Figur 5 wird eine weitere Ausbildungsform des im Zusammenhang mit der Figur 1 beschriebenen Verfahrens in Form eines Zustandsdiagramms erörtert. Entlang der Abszisse ist die Zeit t in Sekunden für jeden der vier Zeitschlitzzyklen Z1 bis Z4 aufgetragen, wobei jeder Zeitschlitzzyklus 15 Sekunden dauert. Pro Sekunde stehen innerhalb eines Zeitschlitzzyklus Z1 - Z4 z.B. 255 Zeitschlitze für die Kommunikation mit dem Access-Point X1 (siehe Fig. 1) zur Verfügung. Auf der Ordinate sind die an der Suche beteiligten Tags Tx aufgetragen. Die Zustände bzw. Modi der einzelnen Tags Tx sind in zeitlicher Folge von links nach rechts in Abszissenrichtung eingetragen.

Die hier erörterte Ausbildungsform ist auch auf das gemäß der Figur 1 erörterte System und die weiteren im Detail beschriebenen Anwendungs- und Ausführungsbeispiele anwendbar. Im Unterschied zu den Erörterungen zur Fig. 1 wird im vorliegenden Fall jedoch das Timing des im Normalmodus zur Anwendung kommenden Zeitschlitzkommunikationsverfahrens verlassen. Diese Vorgehensweise hat sich als schneller, effizienter und energiesparender erwiesen und wird nachfolgend im Detail anhand der Figur 5 erörtert.

Auf die Darstellung der Zeitschlitze selbst (z.B. 255 pro Zeitschlitzzyklus) wurde aus Gründen der Übersichtlichkeit verzichtet. Innerhalb des ersten Zeitschlitzzyklus Z1 empfangen die dem ersten Access-Point X1 zugeordneten Tags T1-T6, T10-T12, T16 und T18 in den jeweiligen ihnen zugeordneten Zeitschlitzen den Suchbefehl SB und der Tag 17 empfängt den Ortungsbefehl OB. Die Figur 5 zeigt auch, dass mehrere der Tags T1-T6, T10-T12, T16-T18 (kollektiv als Tn bezeichnet) ein und demselben Zeitschlitz zugeordnet sein können (siehe z.B.: T1 und T2). Die laufende Nummerierung mit den Zahlen eins bis achtzehn sagt nichts über die Zuordnung des Tags T1-T18 zu einem der Zeitschlitze aus, die z.B. über eine eindeutige Adresse des jeweiligen Tags Tn, wie z.B. die Mac-Adresse (Hardware-Adresse) erfolgen kann. Die Zuordnung wurde vorab festgelegt und ist dem Access-Point X1 bekannt. Vor dem Empfangen des jeweiligen Befehls SB, OB sind die Tags Tn im Normalmodus NM im Schlaf-Zustand SZ. Beim Empfangen der Befehle SB, OB sind die Tags Tn im Aktiv-Zustand AZ. Nach dem Verarbeiten des Befehls SB, OB befinden sich die Tags T1-T6, T10-T12, T16 und T18 im Suchmodus SM und der Tag T17 im Ortungsmodus OM.

Im Rahmen dieser Kommunikation (Zustellung der Befehle SB, OB) wird den Tags Tn auch mitgeteilt, ab welchem Zeitschlitz bzw. ab welcher absoluten Zeitmarke im ersten Zeitschlitzzyklus Z1 die Suche nach dem ortsunbekannten Tag T17 zu starten ist. Im vorliegenden Fall ist als Startzeitpunkt der Ortungssignal-Empfangsdauer OED im ersten Zeitschlitzzyklus die Zeitmarke 13 Sekunden eingestellt. Die Dauer der Ortungssignal-Empfangsdauer OED wurde mit 3 Sekunden gewählt und ragt somit um eine Sekunde in den zweiten Zeitschlitzzyklus Z2 hinein. Diese Informationen können jedoch auch vorab zur Vorbereitung auf die Suche in einem dem ersten Zeitschlitzzyklus Z1 vorangehenden Zeitschlitzzyklus (nicht dargestellt) übermittelt worden sein.

Im Rahmen der Zustellung der Befehle SB und OB wird den Tags T1 - T16 und T18 auch mitgeteilt, dass jeder von ihnen fünfzig Ortungssignale innerhalb der Ortungssignal-Empfangsdauer OED zu senden hat. Dies kann, muss jedoch nicht auch dem ortunbekannten Tag T17 mitgeteilt werden.

Die Tags Tn gehen nach dem Empfangen der Befehle SB, OB wieder in ihren Schlaf-Zustand SZ und verharren in dem Schlaf-Zustand SZ bis zum Startzeitpunkt ZS. Im Unterschied zum normalen Timing des Zeitschlitzkommunikationsverfahrens verläuft ihr Timing nun anders als im Normalmodus NM, in dem sie auf den nächsten ihnen zugewiesenen Zeitschlitz im zweiten Zeitschlitzzyklus Z2 warten würden. Im geänderten Timing warten die Tags T1-T18 nun auf den Startzeitpunkt ZS, der - im vorliegenden Fall angenommen - 2 Sekunden vor Ende des ersten Zeitschlitzzyklus Z1 liegt (absolute Zeitmarke 13 Sekunden im ersten Zeitschlitzzyklus). Zu diesem Startzeitpunkt ZS beginnt die Suche nach dem ortsunbekannten siebzehnten Tag T17.

Zum Startzeitpunkt ZS haben die ortsbekannten Tags T1-T6, T10-T12, T16 und T18 den Suchmodus aktiviert und der ortsunbekannte Tag T17 den Ortungsmodus aktiviert. Sie verlassen kurz vor (ca. 200 Millisekunden) dem Startzeitpunkt ZS ihren Schlaf-Zustand SZ und begeben sich in einen für ihren jeweiligen Modus (Suchmodus SM, Ortungsmodus OM) spezifischen Aktiv-Zustand SAZ. Die betroffenen Tags Tn berechnen unter Kenntnis des ihnen im Normalmodus zugeordneten Zeitschlitzes des Zeitschlitzkommunikationsverfahren und des zuvor empfangenen Startzeitpunkts ZS den Aufwachmoment selbst.

In dem spezifischen Aktivzustand SAZ senden die ortsbekannten Tags T1-T6, T10-T12, T16 und T18 während der Ortungssignal-Empfangsdauer OED von drei Sekunden ihre fünfzig Ortungssignale zu von ihnen selbst definierten zufälligen Zeitpunkten. Das Auftreten des Ortungssignals OS ist somit innerhalb der Ortungssignal-Empfangsdauer OED zufällig verteilt.

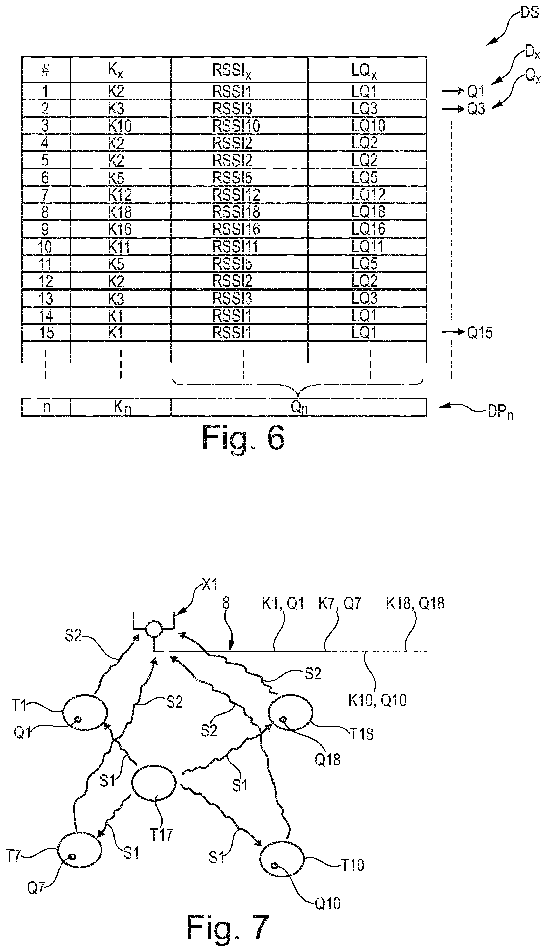

In dem spezifischen Aktivzustand SAZ ist der ortsunbekannte Tag T17 permanent auf Empfang, und er empfängt, so weit keine Kollisionen vom Signalen vorliegen, eine Serie von Ortungssignalen OS ausgesandt von den ortsbekannten Tags Tx, wertet diese hinsichtlich der Empfangsqualität Qx und Kennung Kx des jeweils sendenden, ortsbekannten Tags Tx aus und speichert das betreffende Datenpaar Dx. Dabei können auch mehrere Datenpaare Dx gespeichert werden, die einem bestimmten Tag Tx zugeordnet sind, so wie dies in der Figur 6 dargestellt ist. In der Fig. 6 sind für die ersten fünfzehn einer Serie von Empfangsereignisse (erste Spalte gekennzeichnet mit # nummeriert die Empfangsereignisse) die Kennungen Kx des sendenden Tags Tx sowie der Wert des zugehörigen Received Signal Strength Indicator RSSIx und der Wert der Link Quality LQx Werte eingetragen.

Bei Ablauf der Ortungssignal-Empfangsdauer OED begeben sich alle beteiligten Tags T1 - T18 wieder in den Schlaf-Zustand SZ, was aus Gründen der Übersichtlichkeit in der Figur 5 nur für den ersten Tag T1 visualisiert ist. Aus diesem Schlaf-Zustand SZ erwachen sie rechtzeitig z.B. 1 Sekunden vor dem Auftreten des nächsten Zeitschlitzes, dem der jeweilige Tag Tn zugeordnet ist. Dies ist in der Figur 5 durch einen im Vergleich zum ersten Zeitschlitzzyklus Z1 verlängerte Dauer des Aktivzustands für jeden der Tags Tn dargestellt. Da die Tags Tn über alle Parameter des Zeitschlitzkommunikationsverfahrens und über ihren Austritt aus dem Timing des Zeitschlitzkommunikationsverfahrens informiert sind, berechnen die an der Suche beteiligten Tags Tn ihre Aufwachzeitpunkte selbstständig (siehe Formel 1 allgemeiner Teil der Beschreibung). Nach dem Aufwachen verharren sie im Aktiv-Zustand AZ und lauschen auf die Signale des Access-Points X1, bis Sie die für sich bestimmte Synchronisations-Signalstruktur empfangen und in den synchronen Zustand wiedereintreten (auch re-synchronisieren genannt). Nach ihrer Re-Synchronisierung (also dem wieder Beitreten zu dem Zeitschlitzkommunikationsverfahren) stehen die zuvor an der Suche beteiligten Tags Tn wieder im Zeitschlitzkommunikationsverfahren zur Kommunikation mit dem Access-Point X1 zur Verfügung. Wie in der Figur 5 in dem dritten bzw. dem vierten Zeitschlitzzyklen Z3 und Z4 dargestellt, ist nach der Re-Synchronisierung die Dauer ihres Aktivzustands AZ nun wieder so lange, wie im ersten Zeitschlitzzyklus Z1 bevor die Suche nach dem ortsunbekannten Tag T17 durchgeführt wurde.

Diese Ausbildungsform der Erfindung ist relativ energieeffizient, weil die an der Suche beteiligten Tags Tn nur während einer begrenzten Zeitspanne alle gemeinsam in ihrem spezifischen Aktivzustand SAZ aktiv sind und davor sowie danach im Schlafzustand SZ verharren. Auch ist die Systemeffizienz durch die Suche kaum beeinflusst, weil die Suche auf eine im Verhältnis zur Dauer eines Zeitschlitzzyklus kurze Zeitdauer (Ortungssignal-Empfangsdauer OED) beschränkt werden kann und danach alle an der Suche beteiligten Tags Tn selbständig so rasch als möglich wieder dem Zeitschlitzkommunikationsverfahren beitreten.

Gemäß einem weiteren Ausführungsbeispiel kann der Startzeitpunkt ZS auch unmittelbar mit dem Zeitschlitz zusammenfallen, der direkt an jenen Zeitschlitz anschließt, in dem die Zustellung des Befehls SB oder OB an den letzten an der Suche zu beteiligende Tag (hier der Tag T18) erfolgt. In diesem Fall erübrigt es sich für den betroffene Tag (hier T18) nach Empfang des Befehls wieder in den Schlafzustand einzutreten. Er kann direkt in den jeweiligen Modus (Suchmodus oder Ortungsmodus) wechseln. Zudem kann auch die Ortungssignal-Empfangsdauer OED so bemessen sein, dass die Suche bereits innerhalb des ersten Zeitschlitzzyklus Z1 abgeschlossen ist. In diesem Fall kann bereits zu Beginn des zweiten Zeitschlitzzyklus Z2 mit der Re-Synchronisierung begonnen werden. Besonders vorteilhaft kann es sein, wenn das Ende der Ortungssignal-Empfangsdauer mit dem Ende des ersten Zeitschlitzzyklus Z1 zusammenfällt. Auch in diesem Fall müssen jene an der Suche beteiligten Tags Tn, deren Zeitschlitz in der Nähe oder am Anfang des Zeitschlitzzyklus Z2 liegen, nicht zwingend in den Schlafzustand SZ eintreten. All diese Varianten tragen zur Beschleunigung der Suche, sowie zur Systemeffizienz und zur Energieeinsparung bei.

Es kann auch implementiert sein, dass die an der Suche beteiligten Tags (aber auch alle nicht daran beteiligten Tags, die dem selben Access-Point wie die an der Suche beteiligten Tags zugeordnet sind) nach Ablauf der Ortungssignal-Empfangsdauer OED in jedem Fall in den Schlafmodus wechseln und erst kurz vor dem Auftreten des Zeitschlitzes, dem sie jeweils zugeordnet sind, im nächsten oder übernächsten Zeitschlitzzyklus (gemessen nach Ablauf der Ortungssignal-Empfangszeitdauer OED) aufwachen. Auch können Sie kollektiv zu einem vorab definierten Zeitpunkt z.B. nach Ablauf der Ortungssignal-Empfangsdauer OED zum Beginn des nächsten Zeitschlitzzyklus aufwachen und danach im Aktivzustand auf das Auftreten des Zeitschlitzes warten, dem sie zugeordnet sind, um sich damit zu re-synchronisieren.

In den folgenden drei Figuren 7 bis 9 sind stark schematisiert drei Anwendungsfälle der Erfindung zusammengefasst. Die Anzahl der an der Suche beteiligten Funk-Tags Tn wurde aus Gründen der Übersichtlichkeit auf jeweils fünf Stück reduziert wurde, wobei der siebzehnte Funk-Tag T17 die Rolle eines positionsunbekannte Funk-Tags einnimmt und die anderen Funk-Tags T1, T7, T10 und T18, kurz T1-18 genannt, die Rolle von positionsbekannten Funk-Tags einnehmen.

Im ersten Anwendungsfall gemäß der Fig. 7 werden im Rahmen einer Kommunikation gemäß dem Zeitschlitzkommunikationsverfahren mit dem Access-Point X1 der positionsunbekannte Funk-Tag T17 von dem Normalmodus in den Suchmodus und die anderen positionsbekannten Funk-Tags T1-18 von dem Normalmodus in den Ortungsmodus gesteuert. Alle involvierten Funk-Tags T1-18, T17 warten daraufhin auf den Start der Ortungssignal-Empfangsdauer OED. Der positionsunbekannte Tag T17 sendet während der Ortungssignal-Empfangsdauer OED ein oder mehrere Ortungssignale On aus, was durch Pfeile gekennzeichnet mit dem Bezugszeichen S1 angedeutet ist. Die positionsbekannten Funk-Tags T1-18 empfangen und wertend die Ortungssignale On hinsichtlich der Empfangsqualität Qn (Q1, Q7, Q18, Q10) aus. Nach Ablauf der Ortungssignal-Empfangsdauer OED und Re-Synchronisierung aller Funk-Tags T1-18 mit dem Zeitschlitzkommunikationsverfahren wird die bei dem jeweiligen positionsbekannten Funk-Tag T1-18 ermittelte Empfangsqualität Qn an den Access-Point X1 übertragen, was durch Pfeile gekennzeichnet durch das Bezugszeichen S2 angedeutet ist, wobei der Access-Point X1 den jeweiligen positionsbekannten Funk-Tag T1-18 bzw. dessen Kennung Kn (K1, K7, K10, K18) kennt. Der Access-Point X1 leitet in Folge die vom jeweiligen Funk-Tag T1-18 erhaltene Empfangsqualität Qn zusammen mit der ihm bekannten Kennung Kn des jeweiligen positionsbekannten Funk-Tags T1-18 zur Auswertung weiter.

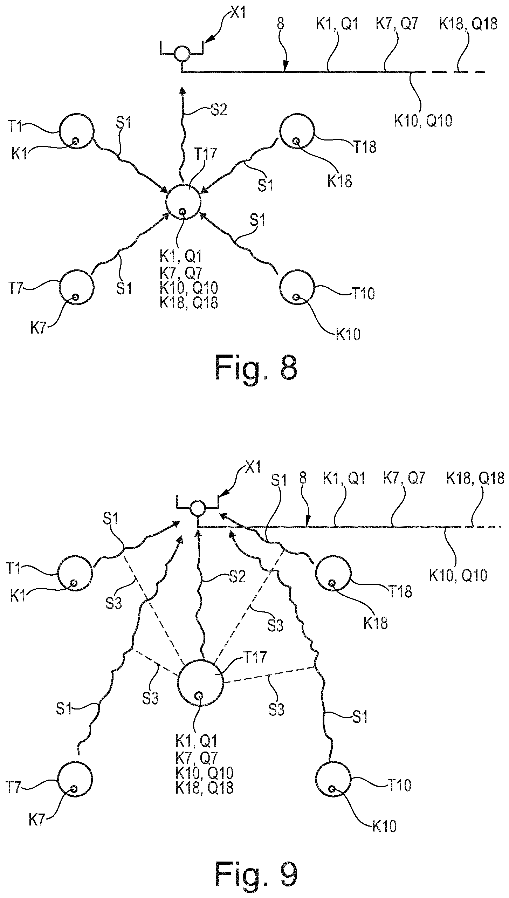

Im zweiten Anwendungsfall gemäß Fig. 8 wurden im Rahmen einer Kommunikation gemäß dem Zeitschlitzkommunikationsverfahren mit dem Access-Point X1 der positionsunbekannte Funk-Tag T17 von dem Normalmodus in den Ortungsmodus und die anderen positionsbekannten Funk-Tags T1-18 von dem Normalmodus in den Suchmodus gesteuert. Alle involvierten Funk-Tags T1-18, T17 warten daraufhin auf den Start der Ortungssignal-Empfangsdauer OED. Die positionsbekannten Funk-Tags T1-18 senden während der Ortungssignal-Empfangsdauer OED jeweils ihr Ortungssignal On an den positionsunbekannten Funk-Tag T17 aus, was durch Pfeile gekennzeichnet mit dem Bezugszeichen S1 angedeutet ist. Das jeweilige Ortungssignal On wird beim positionsunbekannten Funk-Tag T17 empfangen und ausgewertet. Als Ergebnis der Auswertung speichert der positionsunbekannte Funk-Tag T17 Datenpaare aus Kennung Kn des jeweiligen Funk-Tags T1-T18 und Empfangsqualität Qn. Nach Ablauf der Ortungssignal-Empfangsdauer OED und Re-Synchronisierung aller Funk-Tags T1-18 mit dem Zeitschlitzkommunikationsverfahren werden die Datenpaare an den Access-Point X1 übertragen, was durch den Pfeil gekennzeichnet durch das Bezugszeichen S2 angedeutet ist, und von dort zur Auswertung weitergeleitet.

Im Unterschied zum zweiten Anwendungsfall werden beim dritten Anwendungsfall gemäß der Fig. 9 die während der Ortungssignal-Empfangsdauer OED ausgesandten Ortungssignale On an den Access-Point X1 adressiert, während der positionsunbekannte Funk-Tag die Ortungssignale On empfängt, was durch Punkte gekennzeichnet durch das Bezugszeichen S3 zwischen dem positionsunbekannten Funk-Tag T17 und dem betreffenden Pfeil S1 angedeutet ist, und auswertet. Von dem positionsunbekannten Funk-Tag T17 werden die ermittelten und gespeicherten Datenpaare DP an den Access-Point X1 übermittelt und von dort an die Datenverarbeitungseinrichtung weitergeleitet.

Es sei erwähnt, dass die Ortungssignale On, die in den drei oben erörterten Anwendungsfällen immer adressiert beschrieben wurden, auch ohne Adressierung zur Anwendung kommen können.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung gemäß den angehängten Ansprüchen zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Auch können individuell offenbarte Merkmale mit anderen Merkmalen kombiniert werden, ohne dass von dem Konzept von der Defintion der Erfindung gemäß den angehängten Ansprüchen abgewichen wird.

**Patentansprüche**

1. Verfahren zum Orten eines positionsunbekannten Funk-Tags (T17), wobei in einer einem einzigen Access-Point funktechnisch zugeordneten Gruppe von Funk-Tags (T1-T18) ein Ortungssignal (On):

a) entweder durch einen oder mehrere positionsbekannte Funk-Tags (T1-T6, T10-T12, T16, T18) ausgesendet wird und von dem positionsunbekannten Funk-Tag (T17) empfangen wird,

b) oder durch den positionsunbekannten Funk-Tag (T17) ausgesendet wird und von einem oder mehreren positionsbekannten Funk-Tags (T1-T6, T10-T12, T16, T18) empfangen wird,

und in beiden Fällen a), b) bei dem das Ortungssignal (On) empfangenden Funk-Tag (T1-T6, T10-T12, T16, T18; T17) die Empfangsqualität (Qn) des Ortungssignals (On) zum Eingrenzen der Position des positionsunbekannten Funk-Tags (T17) ermittelt und bereitgestellt wird,

**dadurch gekennzeichnet, dass**

bei erfolgter Ortung eines positionsunbekannten Funk-Tags (T17) eine Anzahl positionsbekannter Funk-Tags (T1-T6, T10-T12, T16, T18), die ortsbenachbart zu dem georteten Funk-Tag (T17) positioniert sind, veranlasst wird, die Ortung des positionsunbekannten Funk-Tags (T17) in ihrer Umgebung mit Hilfe Ihrer Anzeigeeinrichtung (11) anzuzeigen, z.B. durch Anzeige eines Symbols, beispielsweise eines Kreises, oder eines Blinkverhaltens.

2. Verfahren nach Anspruch 1, wobei die Funk-Tags (Tn) eine Logikstufe (9) aufweisen, wobei die Anzeigeeinrichtung (11) durch die Logikstufe (9) angesteuert wird.

3. Verfahren nach Anspruch 2, bei dem, sobald die Logikstufe (9) des Funk-Tags (T17) als Folge eines empfangenen Ortungsbefehls ihren Betriebszustand von einem Normalmodus in einen Ortungsmodus ändert, dies mit Hilfe der Logikstufe (9) in Form einer Statusinformation, die insbesondere für einen Menschen lesbar ist, mithilfe der Anzeigeeinrichtung (11) visualisiert wird.

4. Verfahren nach einem der vorangehenden Ansprüche, wobei jener zum Senden des Ortungssignals (On) bestimmte Tag (Tn), insbesondere der positionsbekannte Funk-Tag (T1-T6, T10-T12, T16, T18), durch einen empfangenen Suchbefehl von seinem Normalmodus in einen Suchmodus umgeschaltet wird, wobei in dem Suchmodus das Ortungssignal (On) und / oder der Zeitpunkt für das Aussenden des Ortungssignals (On) und / oder die Häufigkeit des Aussendens des Ortungssignal (On) festgelegt wird.

5. Verfahren nach einem der vorangehenden Ansprüche, wobei jener zum Empfangen des Ortungssignals (On) bestimmte Tag (Tn), insbesondere der positionsunbekannte Funk-Tag (T17), durch einen empfangenen Ortungsbefehl von seinem Normalmodus in einen Ortungsmodus umgeschaltet wird, wobei in dem Ortungsmodus eine Empfangsbereitschaft zum Empfangen von Ortungssignalen (On) während einer Ortungssignal-Empfangsdauer (OED) besteht.

6. Verfahren nach Anspruch 5, wobei
die Ortungssignal-Empfangsdauer (OED) so bemessen wird, dass alle an der Suche des positionsunbekannten Funk-Tags (T17) beteiligten positionsbekannten Funk-Tags (T1-T6, T10-T12, T16, T18) ihr Ortungssignal (On) innerhalb der Ortungssignal-Empfangszeitdauer (OED) zumindest einmal, bevorzugt jedoch mehrmals, aussenden können.

7. Verfahren nach Anspruch 5 oder 6, wobei
jener zum Empfangen des Ortungssignals (On) bestimmte Funk-Tag (Tn), insbesondere der positionsunbekannte Funk-Tag (T17), für jedes während der Ortungssignal-Empfangsdauer (OED) empfange Ortungssignal (On) ein Datenpaar (Dn) zur späteren Verwendung speichert.

8. Verfahren nach Anspruch 7, wobei
jener zum Empfangen des Ortungssignals bestimmte Funk-Tag (Tn), insbesondere der positionsunbekannte Funk-Tag (T17), erst nach Verstreichen der Ortungssignal-Empfangsdauer (OED) ein oder mehrere gespeicherte Datenpaare (Dn) aussendet.

9. Verfahren nach einem der vorangehenden Ansprüche, wobei der positionsunbekannte Funk-Tag (T17) eine Anzeigeeinrichtung aufweist, wobei mit ihrer Hilfe eine Statusinformation visualisiert wird, die seinen internen oder systemweiten Status als zu ortender positionsunbekannter Funk-Tag repräsentiert.

10. Verfahren nach einem der vorangehenden Ansprüche, wobei für die Funk-Tags (Tn) eine Kalibrierungs-Kommunikation mit einem ortsbekannten Access-Point (X1, X2) durchgeführt wird, wobei die Empfangsqualität (Qn) für jeden involvierten Funk-Tag (Tn) ermittelt wird und eine Beziehung zwischen ermittelter Empfangsqualität (Qn) und der Position für den betreffenden positionsbekannten Funk-Tag (Tn) definiert wird.

**11.** Verfahren nach einem der vorangehenden Ansprüche, wobei die Tags (T1-T18) in einem Normalmodus mit einem Access-Point unter Benutzung eines Zeitschlitzkommunikationsverfahrens kommunizieren, wobei gemäß diesem Zeitschlitzkommunikationsverfahren in einer definierten Zeiteinheit eine definierte Anzahl von Zeitschlitzen zur Verfügung steht und einem der Zeitschlitze ein oder mehrere Tags zugeordnet ist/sind und jeder Tag in seinem Zeitschlitz individuell adressierbar ist, um Daten bzw. Kommandos von dem Access-Point zu empfangen und / oder Daten an den Access-Point zu senden, wobei der positionsunbekannte Tag (T17) und/oder zumindest ein positionsbekannter Tag (T1-T6, T10-T12, T16, T18) das Zeitschlitzkommunikationsverfahrens verlässt/verlassen, um das Ortungssignal (On) zu senden oder zu empfangen.

**12.** Verfahren nach Anspruch 11, wobei nach dem Senden oder Empfangen des Ortungssignals (On) die betroffenen Funk-Tags (Tn) wieder dem Zeitschlitzkommunikationsverfahren beitreten und in den Normalmodus zurückkehren.

**13.** Verfahren nach einem der vorangehenden Ansprüche, wobei mit Hilfe einer Datenverarbeitungseirichtung besagte Gruppe von Funk-Tags (T1-T18) aus der Gesamtheit der Funk-Tags (Tn) eines Systems, insbesondere aus der Gesamtheit der einer Funk-Kommunikationseinrichtung, insbesondere einem Access-Point, zugeordneten Funk-Tags selektiert wird.


**Claims**

**1.** Method for locating a radio tag (T17) whose position is unknown, wherein, from among a group of radio tags (T1-T18), which, in terms of radio communication, are associated with a single access point, a locating signal (On):

> **a)** either is sent out by means of one or multiple radio tags (T1-T6, T10-T12, T16, T18) whose position(s) is/are known, and is received by the radio tag (T17) whose position is unknown,
> **b)** or is sent out by means of the radio tag (T17) whose position is unknown, and received by one or multiple radio tags (T1-T6, T10-T12, T16, T18) whose position(s) is/are known,
> and, in both cases (a), (b), the reception quality (Qn) of the locating signal (On) at the radio tag (T1-T6, T10-T12, T16, T18; T17) receiving the locating signal (On) is determined and provided to narrow down the position of the radio tag (T17) whose position is unknown,
> **characterized in that**,
> when a radio tag (T17) whose position is unknown has been located, a number of radio tags (T1-T6, T10-T12, T16, T18) whose positions are known and which are positioned adjacent to the located radio tag (T17) are caused to indicate the location of the radio tag (T17) whose position had been unknown in their environment with the help of their display devices (11), e.g., by displaying a symbol, such as a circle, or by means of a flashing behaviour.

**2.** Method according to claim 1, wherein the radio tags (Tn) have a logic stage (9), wherein the display device (11) is controlled by the logic stage (9).

**3.** Method according to claim 2, in which, as soon as the logic stage (9) of the radio tag (T17) changes its operating state from a normal mode to a locating mode as a result of a received locating command, this change is visualized by means of the logic stage (9) via the display device (11) in the form of a status information, which is readable in particular for a human.

**4.** Method according to any one of the preceding claims, wherein the tag (Tn) specified for transmitting the locating signal (On), in particular the radio tag (T1-T6, T10-T12, T16, T18) whose position is known, is switched from its normal mode to a search mode by a received search command, wherein the locating signal (On) and/or the time for transmitting the locating signal (On) and/or how often the locating signal (On) will be transmitted is defined in the search mode.

**5.** Method according to any one of the preceding claims, wherein the tag (Tn) specified for receiving the locating signal (On), in particular the radio tag (T17) whose position is unknown, is switched from its normal mode to a locating mode by a received locating command, wherein a readiness to receive the locating signals (On) during a locating signal reception duration (OED) is present in the locating mode.

**6.** Method according to claim 5, wherein the locating signal reception duration (OED) is measured such that all radio tags (T1-T6, T10-T12, T16, T18) whose positions are known and which are involved in the search of the radio tag (T17) whose position is unknown can transmit their locating signal (On) within the locating signal reception duration (OED) at least once, but preferably multiple times.

7. Method according to claim 5 or 6, wherein the radio tag (Tn) intended for receiving the locating signal (On), in particular the radio tag (T17) whose position is unknown, stores a data pair (Dn) for each locating signal received during the locating signal reception duration (OED) for later use.

8. Method according to claim 7, wherein the radio tag (Tn) intended for receiving the locating signal (On), in particular the radio tag (T17) whose position is unknown, transmits one or more stored data pairs (Dn) only after the locating signal reception duration (OED) has expired.

9. Method according to any one of the preceding claims, wherein the radio tag (T17) whose position is unknown has a display device, wherein said display device is used to visualize a status information, which represents its internal or system-wide status, as a radio tag whose position is unknown and which is to be located.

10. Method according to any one of the preceding claims, wherein a calibration communication with a known access point (X1, X2) is carried out for the radio tags (Tn), wherein the reception quality (Qn) for each involved radio tag (Tn) is determined and a relationship is defined between determined reception quality (Qn) and the position for the respective radio tags (Tn) whose positions are known.

11. Method according to any one of the preceding claims, wherein the tags (T1-T18) communicate with an access point using a time slot communication method in a normal mode, wherein, according to this time slot communication method, a defined number of time slots is available in a defined unit of time, and one or more tags are associated with one of the time slots, and each tag can be individually addressed in its time slot for receiving data or commands from the access point and/or transmitting data to the access point, wherein the tag (T17) whose position is unknown and/or at least one tag (T1-T6, T10-T12, T16, T18) whose position is known depart(s) from the time slot communication method to transmit or receive the locating signal (On).

12. Method according to claim 11, wherein, after transmitting or receiving the locating signal (On), the respective radio tags (Tn) rejoin the time slot communication method and return to normal mode.

13. Method according to any one of the preceding claims, wherein said group of radio tags (T1-T18) is selected by means of a data processing device from the totality of the radio tags (Tn) of a system, in particular from the totality of the radio tags associated with a radio communication device, in particular an access point.

**Revendications**

1. Procédé de localisation d'une balise radio à position inconnue (T17), dans lequel dans un groupe attribué par radio à point d'accès unique de balises radio (Tl-T18) un signal de localisation (On):

   a) soit par une ou plusieurs balises radio à position connue (T1-T6, T10-T12, T16, T18) est émis et est reçu par la balise radio à position inconnue (T17),
   b) soit est transmis par la balise radio à position inconnue (T 17) et reçu par une ou plusieurs balises radio à position connue (Tl-T6, T10-T12, T16, T18),
   et dans les deux cas a), b) pour la balise radio (T1-T6, T10-T12, T16, T18, T17) recevant le signal de localisation (On), la qualité de réception (Qn) du signal de localisation (On) est déterminée et fournie pour limiter la position de la balise radio à position inconnue (T17),
   **caractérisé en ce que**
   lorsqu'une balise radio à position inconnue (T17) a été localisée, un certain nombre de balises radio à position connue (T1-T6, T10-T12, T16, T18), qui sont positionnés à côté de la balise radio localisée (T17), est amené à localiser la balise radio (T17) à position inconnue dans son environnement à l'aide de son dispositif d'affichage (11), par exemple en affichant un symbole, par exemple un cercle, ou un comportement de clignotement.

2. Procédé selon la revendication 1, dans lequel les balises radio (Tn) présentent un étage logique (9), dans lequel le dispositif d'affichage (11) est commandé par l'étage logique (9).

3. Procédé selon la revendication 2, dans lequel, dès que l'étage logique (9) de la balise radio (T17) suite à une commande de localisation reçue fait passer l'état de fonctionnement d'un mode normal à un mode de localisation, ceci à l'aide de l'étage logique (9) sous la forme d'informations d'état, qui peuvent notamment être lues par une personne, est visualisé à l'aide du dispositif d'affichage (11)

4. Procédé selon une quelconque des revendications précédentes, dans lequel cette balise (Tn) déterminée pour émettre le signal de localisation (On), en particulier la balise radio à position connue (T1-T6, T10-T12, T16, T18), est commutée par une commande de recherche reçue passe de son mode normal à un mode de recherche, dans lequel dans le mode de recherche le signal de localisation (On) et/ou l'heure d'envoi du signal de localisation (On) et/ou la fréquence d'envoi du signal de localisation (On) est spécifié.

5. Procédé selon une quelconque des revendications précédentes, dans lequel cette balise (Tn) déterminée pour recevoir le signal de localisation (On), en particulier la balise radio à position inconnue (T17), est commutée de son mode normal à un mode de localisation par une commande de recherche reçue, dans lequel, dans le mode de localisation, une disposition à recevoir pour recevoir des signaux de localisation (On) perdure pendant une période de réception de signal de localisation (OED).

6. Procédé selon la revendication 5, dans lequel la période de réception du signal de localisation (OED) est dimensionnée de telle sorte que toutes les balises radio à position connue (T1-T6, T10-T12, T16, T18) impliquées dans la recherche de la balise radio à position inconnue (T17) peuvent émettre leur signal de localisation (On) pendant la période de réception du signal de localisation (OED) au moins une fois, mais de préférence plusieurs fois.

7. Procédé selon la revendication 5 ou 6, dans lequel la balise radio (Tn) déterminée pour recevoir le signal de localisation (On), en particulier la balise radio à position inconnue (T17), mémorise une paire de données (Dn) en vue d'une utilisation ultérieure pour chaque signal de localisation (OED) reçu pendant la période de réception du signal de localisation (OED).

8. Procédé selon la revendication 7, dans lequel la balise radio (Tn) déterminée pour recevoir le signal de localisation, en particulier la balise radio à position inconnue (T17), reçoit une ou plusieurs paires de données mémorisées uniquement après l'écoulement de la période de réception du signal de localisation (OED).

9. Procédé selon une des revendications précédentes, dans lequel la balise radio à position inconnue (T17) présente un dispositif d'affichage, à l'aide duquel des informations d'état sont visualisées, qui représentent son état interne ou à l'échelle du système en tant que balise radio à position inconnue à localiser.

10. Procédé selon une quelconque des revendications précédentes, dans lequel pour la balise radio (Tn) un étalonnage/ une communication avec un point d'accès localement connu (X1, X2), est effectué, dans lequel la qualité de réception (Qn) est déterminée pour chaque balise radio impliquée (Tn) et une relation entre la qualité de réception déterminée (Qn) et la position de la balise radio (Tn) à position connue concernée est définie.

11. Procédé selon une quelconque des revendications précédentes, dans lequel les balises (T1-T18) communiquent en mode normal avec un point d'accès en utilisant un procédé de communication par tranche de temps, dans lequel selon ce procédé de communication par tranche de temps dans une unité de temps définie, un nombre défini de tranches de temps est disponible et une des une ou plusieurs balises est/sont attribuées à un des intervalles de temps et chaque balise peut être adressée individuellement dans son intervalle de temps afin de recevoir des données ou des commandes du point d'accès et/ou d'envoyer des données au point d'accès, dans lequel la balise à position inconnue (T17) et/ou au moins une balise à position connue (T1-T6, T10-T12, T16, T18) quitte/quittent le procédé de communication par tranche de temps, afin d'envoyer ou de recevoir le signal de localisation (On).

12. Procédé selon la revendication 11, dans lequel après l'envoi ou la réception du signal de localisation (On) les balises radio concernées (Tn) soit rejoignent le procédé de communication par tranches de temps, soit reviennent en mode normal.

13. Procédé selon une quelconque des revendications précédentes, dans lequel à l'aide d'un dispositif de traitement de données, ledit groupe de balises radio (T1-T18) est sélectionné à partir de l'intégralité des balises radio (Tn) d'un système, en particulier à partir de l'intégralité d'un dispositif de radiocommunication, en particulier d'un point d'accès, de balises radio attribuées.

Fig. 1

$T_n$

11

9

RXD

AD

$K_n$

TXD

10

# Fig. 2

13

14

15

16

17

18

19

20

21

22

# Fig. 3

EP 3 543 730 B1

| $K_n$ | RSSI |
|-------|------|
| K1 | -100 |
| K2 | -95 |
| K3 | -90 |
| K4 | -60 |
| K5 | -50 |
| K6 | -40 |
| ⋮ | ⋮ |
| K10 | -55 |
| K11 | -45 |
| K12 | -20 |
| K16 | -70 |
| K18 | -40 |

DS

$Q_n$

# Fig. 4

22

Fig. 5

EP 3 543 730 B1

| # | $K_x$ | $RSSI_x$ | $LQ_x$ |
|---|---|---|---|
| 1 | K2 | RSSI1 | LQ1 |
| 2 | K3 | RSSI3 | LQ3 |
| 3 | K10 | RSSI10 | LQ10 |
| 4 | K2 | RSSI2 | LQ2 |
| 5 | K2 | RSSI2 | LQ2 |
| 6 | K5 | RSSI5 | LQ5 |
| 7 | K12 | RSSI12 | LQ12 |
| 8 | K18 | RSSI18 | LQ18 |
| 9 | K16 | RSSI16 | LQ16 |
| 10 | K11 | RSSI11 | LQ11 |
| 11 | K5 | RSSI5 | LQ5 |
| 12 | K2 | RSSI2 | LQ2 |
| 13 | K3 | RSSI3 | LQ3 |
| 14 | K1 | RSSI1 | LQ1 |
| 15 | K1 | RSSI1 | LQ1 |

| n | $K_n$ | $Q_n$ |
|---|---|---|

## Fig. 6

## Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013007089 A1
- EP 2733503 A1

- DE 102013014849 A1